# EUROPÄISCHE PATENTSCHRIFT

(11) **EP 4 295 062 B1**
(45) Veröffentlichungstag und Bekanntmachung des Hinweises auf die Patenterteilung: **11.06.2025**
(21) Anmeldenummer: 22703634.0
(22) Anmeldetag: 03.02.2022
(51) Int. Cl.: F16H 61/32, F16H 61/04, F16H 61/28, F16H 63/18

(54) **WECHSELGETRIEBE MIT ELEKTROMOTORISCH ANGETRIEBENER SCHALTWALZE SOWIE VERFAHREN ZUR STEUERUNG EINES SOLCHEN WECHSELGETRIEBES**
VARIABLE-SPEED TRANSMISSION WITH SHIFT DRUM DRIVEN BY AN ELECTRIC MOTOR, AND METHOD FOR CONTROLLING SUCH A VARIABLE-SPEED TRANSMISSION
BOÎTE DE VITESSES À VITESSE VARIABLE ÉQUIPÉE D'UN TAMBOUR DE CHANGEMENT DE VITESSE ENTRAÎNÉ PAR MOTEUR ÉLECTRIQUE ET PROCÉDÉ DE COMMANDE D'UNE TELLE BOÎTE DE VITESSES À VITESSE VARIABLE

(30) Priorität: 22.02.2021 DE 102021104101
(43) Veröffentlichungstag der Anmeldung: 27.12.2023
(73) Patentinhaber: MEGA-Line RACING ELECTRONIC GmbH, 93342 Saal a. d. Donau (DE)
(72) Erfinder: FUCHS, Norbert, 93342 Saal a. d. Donau (DE); SCHMIDT, Christian, 93342 Saal a. d. Donau (DE)
(74) Vertreter: Benninger, Johannes
(86) Internationale Anmeldenummer: PCT/EP2022/052592
(87) Internationale Veröffentlichungsnummer: WO 2022/175100

(56) Entgegenhaltungen:
- WO-A1-2004/065825
- DE-A1- 102010 013 962
- DE-A1- 102012 200 183

## Beschreibung

Die vorliegende Erfindung betrifft ein Verfahren zur Steuerung eines drehmoment- und/oder drehzahlwandelnden Wechselgetriebes. Zudem betrifft die Erfindung ein solches drehmoment- und/oder drehzahlwandelndes Wechselgetriebe.

Bei herkömmlichen Fahrzeugantrieben wird die Antriebsleistung einer Brennkraftmaschine auf mechanischem Wege auf wenigstens eine angetriebene Achse des Fahrzeugs übertragen. Da die typischen Drehzahlbereiche, in denen Brennkraftmaschinen ökonomisch und mit ausreichendem Drehmoment und ausreichender Leistung betrieben werden, nicht zu den am Achsantrieb benötigten Umdrehungsgeschwindigkeiten passen, sind zwischengeschaltete Getriebeeinheiten notwendig, die sowohl als Drehmomentwandler als auch als Drehzahlwandler fungieren.

Solche Getriebe können als manuell schaltbare Wechselgetriebe ausgebildet sein, bei denen Übersetzungswechsel unter gleichzeitiger Trennung eines Kraftschlusses, was üblicherweise mit einer bedarfsweise von einem Fahrzeugführer betätigbaren Reibungskupplung erfolgen kann, durchgeführt werden. Neben sog. automatischen Getrieben, die bspw. als Planetengetriebe ausgeführt sein können, gibt es zahlreiche weitere Getriebebauarten, bei denen die Übersetzungswechsel durch manuelle Vorgaben erfolgen.

Drehmoment- oder drehzahlwandelnde Wechselgetriebe können auch bei elektrischen Fahrzeugantrieben zum Einsatz kommen, da die als Fahrantriebe eingesetzten elektrischen Antriebsmotoren normalerweise nicht den gesamten Geschwindigkeitsbereich gleichermaßen sinnvoll abzudecken. Je nach Antriebskonzept lässt sich ein hohes Anfahrdrehmoment meist nicht mit einer hohen Endgeschwindigkeit kombinieren, so dass es sinnvoll sein kann, eine Angleichung mittels eines im Antriebsstrang befindlichen Wechselgetriebes vornehmen zu können.

Manuell schaltbare Wechselgetriebe weisen oftmals Zahnradsätze auf, deren jeweiliger Eingriff mittels Schiebemuffen gesteuert werden kann, die auf im Getriebegehäuse gelagerten Wellen verschoben werden können, um solchermaßen verschiedene Zahnradpaarungen in Verzahnungseingriff bringen zu können. Die auf den Wellen gelagerten und dort verschiebbaren Schiebemuffen werden häufig mittels drehbarer Schaltwalzen betätigt, wobei die Schaltwalzen über Steuerkurven mit Schaltgabeln oder Schaltstiften zusammenwirken, die wiederum in die Schiebemuffen eingreifen oder mit den Schiebemuffen zusammenwirken. Eine Drehung der Schaltwalze um einen definierten Drehwinkel, der bspw. auch weniger als 90° betragen kann, bewirkt eine Verschiebung oder Winkelverstellung der mit den Schiebemuffen gekoppelten Schaltgabeln oder Schaltstiften, was wiederum eine Aktivierung oder Deaktivierung einer der Zahnradpaarungen und damit das Einlegen oder Auslegen einer Übersetzungsstufe des Wechselgetriebes bewirkt.

Eine besonders kompakte Bauform derartiger manuell betätigbarer Wechselgetriebe ist durch ein sog. sequentiell arbeitendes Getriebe gebildet, bei dem durch einen Einsatz geeigneter Sensorik und geeigneter Aktoren auch teilautomatisierte oder vollautomatische Schalt- und Übersetzungswechselvorgänge ermöglicht sind.

Die DE 10 2010 013 962 A1 beschreibt ein sequentielles Getriebeschaltsystem mit einer Steuerung für eine motorisch betriebene Getriebeschaltwalze. Das Getriebe umfasst mindestens zwei Getriebesätze, die wahlweise kuppelbar sind, sowie eine drehbare Schaltwalze zur Auswahl der einzukuppelnden Getriebesätze, wodurch eine Eingangswelle des Getriebes kraft- und drehmomentschlüssig mit einer Ausgangswelle des Getriebes verbunden ist. Die Schaltwalze wird von einem Steuerungsmotor angetrieben. Ein Drehmomentsensor erfasst ein vom Steuerungsmotor auf die Schaltwalze ausgeübtes Antriebsmoment. Der Steuerungsmotor wird auf Grundlage der vom Drehmomentsensor erfassten Drehmomentwerte angesteuert. Solchermaßen wird das Kuppeln des Getriebesatzes gesteuert.

Ein Steuerungssystem mit einem Stellglied zur Positionsveränderung einer Schaltwalze eines Zahnradwechselgetriebes ist zudem aus der WO 2004/65825 A1 bekannt. Ein Positionsregler sorgt hierbei für eine Regelung der Position der Schaltwalze bei einem Wechsel von einem Ursprungsgang in einen Zielgang.

Darüber hinaus beschreibt die EP 1 199 500 B1 eine elektromotorisch angetriebene Schaltwalze eines Wechselgetriebes, wobei der die Schaltwalze antreibende Elektromotor einen gehäuselosen Stator und einen Rotor aufweist, die im Interesse einer kompakten Bauweise zwischen der Schaltwalze und einer diese lagernden Achse angeordnet sind.

Aus der DE 10 2012 200 183 A1 ist weiterhin ein Klauenkupplungsgetriebesystem bekannt. Das Klauenkupplungsgetriebesystem mit Klauenkupplungen soll die Geräusche, die sich aus dem Eingreifen von Klauen während des Verzahnens von Zahnrädern ergeben, verringern. Hierzu umfasst das Klauenkupplungsgetriebesystem mehrere Zahnräder, die benachbart zueinander auf den entsprechenden gleichen Wellen installiert sind, so dass sie nicht relativ zu den zugehörigen Wellen drehbar sind und dass sie axial verschiebbar sind. Zudem sind weitere Zahnräder vorgesehen, die installiert sind, so dass sie relativ zu den zugehörigen Wellen drehbar sind und nicht axial verschiebbar sind. Jedes der mehreren Zahnräder hat Klauenzähne, die in der Axialrichtung vorstehen, jedes der weiteren Zahnräder weist in der Axialrichtung vertiefte Klauenlöcher auf. Gangstufen sind schaltbar, indem die Klauenzähne und die Klauenlöcher in Eingriff und Ausrückung gebracht werden. Ein Drehzahländerungsverhältnismaß eines Drehzahländerungsverhältnisses bei einer beliebigen n-Gang-Gangstufe zu einem Drehzahländerungsverhältnis bei einer (n + 1)-Gang-Gangstufe ist auf 0,725 oder mehr festgelegt.

Bekannte sequentiell schaltende Getriebe können als sog. Dog-Boxen ausgebildet sein, deren Charakteristika u.a. darin bestehen, dass sie sich sehr schnell und ohne die von herkömmlichen Wechselgetrieben bekannte Synchronisation schalten lassen. Eine solche sog. Dog-Box, die auch als Dog-Ring-Getriebe bezeichnet wird, kann zwar prinzipiell auch nach einem bekannten H-Schaltschema arbeiten. Die in solchen Dog-Ring-Getrieben oder Dog-Boxen eingesetzten Schaltmuffen weisen nicht die übliche größere Anzahl kleiner Eingriffszähne zum axialen Eingriff mit den zu schaltenden Gangrädern auf, sondern meist nur wenige große Zähne, die zudem leicht hinterschnitten sind. Die gleiche Anzahl Zähne findet sich an den Stirnseiten der mit den Schiebemuffen in Eingriff bringbaren Gangrädern. Die Schaltmuffen und Gangräder können bspw. vier bis sechs große Zähne aufweisen, wobei über dem stirnseitigen Eingriffsring der Schaltmuffen und Gangräder das Verhältnis zwischen Zahn und Freiraum bei etwa 30:70 liegen kann, was insbesondere der Reduzierung des Risikos dienen soll, dass beim Schaltvorgang Zahn auf Zahn trifft.

Da die herkömmlichen Synchronringe aus Bronzematerial entfallen, erfolgt bei solchen Getriebebauarten eine schlagartige Synchronisierung, wenn die Zähne ineinandergreifen. Die Zähne sind nicht konisch, sondern flach geformt und sind seitlich hinterschliffen oder hinterschnitten, was für ein Zusammenziehen des Gangrades und der Schaltmuffe unter Last sorgen kann, und was gleichzeitig verhindern kann, dass die Gänge nach dem Herstellen der Verbindung wieder herausspringen. Allerdings führt diese sehr harsche Synchronisierung für einen relativ hohen Verschleiß an den Zahnkanten der Schaltmuffen. Um die Zähne und Zahnkanten nicht zusätzlich zu belasten, müssen die Schaltvorgänge schnell erfolgen, in der Regel deutlich schneller als bei herkömmlich synchronisierten Getrieben, wobei allerdings die Schaltvorgänge wahlweise ohne Zuhilfenahme der Kupplung erfolgen können, sofern zum richtigen Zeitpunkt die Last im Antriebsstrang in ausreichender Weise reduziert wird.

Ein Dog-Box-Getriebe kann mittels einer Schaltwalze als sequentiell arbeitendes Getriebe ausgeführt sein. Der Begriff des sequentiell arbeitenden Getriebes meint die Abfolge der Gangstufen, nicht aber die Anordnung der Gänge im Getriebe. Die für die Verschiebung der Schiebemuffen zuständige Schaltwalze, die auf das jeweilige Getriebe abgestimmt ist, hat Einfräsungen, die als Kulissen dienen, mit denen die Schaltgabeln in ihre Position geschoben werden. Dabei erfolgt das Wählen der Gasse und das Einlegen des Ganges weitgehend simultan. Die Schaltwalze ist auf jedes Getriebe abgestimmt. Als Vorteil solcher Getriebe ist die hohe Schaltgeschwindigkeit zu nennen.

Die vorrangige Aufgabe der Erfindung besteht darin, ein verbessertes Verfahren zur Steuerung eines Wechselgetriebes mit einer elektromotorisch angetriebenen Schaltwalze zur Verfügung zu stellen, wodurch alle typischerweise vorkommenden Betriebszustände, zu denen insbesondere alle Wechselvorgänge zur Anwahl unterschiedlicher Übersetzungsstufen des Getriebes gehören, möglichst materialschonend und zuverlässig durchführbar sein sollen.

Damit im Zusammenhang steht die weitere Aufgabe der Erfindung, ein verbessert steuerbares Wechselgetriebe mit elektromotorisch angetriebener Schaltwalze zur Verfügung zu stellen, mit dem die typischerweise vorkommenden Betriebszustände, zu denen insbesondere alle Wechselvorgänge zur Anwahl unterschiedlicher Übersetzungsstufen des Getriebes gehören, möglichst materialschonend und zuverlässig durchgeführt werden können.

Diese Aufgaben werden durch ein Verfahren zur Steuerung eines Wechselgetriebes mit den Merkmalen des unabhängigen Verfahrensanspruchs 1 sowie mit einem Wechselgetriebe mit den Merkmalen des unabhängigen Anspruchs 25 gelöst. Weitere vorteilhafte Ausgestaltungen werden durch die jeweils abhängigen Ansprüche beschrieben.

Zur Lösung der genannten Aufgaben schlägt die vorliegende Erfindung ein Verfahren zur Steuerung eines drehmoment- und/oder drehzahlwandelnden Wechselgetriebes vor, das über eine Eingangswelle und eine Ausgangswelle sowie mindestens zwei Übersetzungsstufen verfügt. Das Wechselgetriebe, das mit dem erfindungsgemäßen Verfahren gesteuert wird, weist weiterhin wenigstens zwei wechselbare Zahnradpaarungen auf. Die Zahnräder dieser wenigstens zwei wechselbaren Zahnradpaarungen sind jeweils auf Wellen gelagert und/oder rotieren auf oder mit diesen in einem Getriebegehäuse oder anderweitig gelagerten Wellen. Typischerweise können diese Zahnräder oder Zahnradpaarungen dadurch aktiviert oder in Eingriff gebracht werden, indem Klauenringe in axialer Richtung auf den Wellen verschoben werden, um je nach gewünschter Übersetzungsstufe unterschiedliche Zahnradpaarungen in einen Verzahnungseingriff bringen zu können.

Weiterhin umfasst das Wechselgetriebe geeignete Schaltelemente, insbesondere in Form von beweglichen Schaltgabeln, Schaltstiften o. dgl., die auf Schiebemuffen wirken, die mit den Zahnradpaarungen bzw. den Zahnrädern der Zahnradpaarungen in Verbindung stehen und diese wechseln können, womit insbesondere ein axiales Verschieben der mit den Zahnrädern in Eingriff bringbaren Klauenringe gemeint ist, wobei die Klauenringe dafür sorgen, dass die jeweiligen Zahnräder oder Zahnradpaarungen in Eingriff kommen, die die jeweils anzuwählende Übersetzungsstufe liefern.

Außerdem stehen die Schaltelemente in Eingriff und/oder befinden sich in Wirkverbindung mit einer in definierte Winkellagen bringbaren und zwischen diesen Winkellagen verdrehbaren Schaltwalze, wobei diese Schaltwalze über einen elektromotorischen Antrieb in Form eines elektromotorischen Direktantriebs verfügt, der die Schaltwalze drehen und in die jeweiligen definierten Winkellagen bringen kann. Vorzugsweise kann der elektromotorische Direktantrieb der Schaltwalze durch einen bürstenlosen Gleichstrommotor oder einen anderen geeigneten Elektromotor gebildet sein, der über die gewünschten Eigenschaften verfügt, die für den vorgesehenen Einsatzzweck notwendig oder besonders wünschenswert sind.

Ein solcher Antriebsmotor, der aufgrund seines spezifischen Einsatzzweckes der Gattung der sog. Langsamläufer zuzuordnen ist, kann auch als Torquemotor bezeichnet werden. Solche Torquemotoren weisen bei vergleichsweise geringem Drehzahlniveau relativ hohe Drehmomente auf. Auf diese Weise kann bei einem solchen Wechselgetriebe der elektromotorisch ausgebildete Schaltwalzenantrieb besonders kompakt und mit hoher Leistungsdichte ausgeführt sein.

Eine sinnvolle Ausführungsvariante des erfindungsgemäß steuerbaren Wechselgetriebes kann vorsehen, dass der mit der Schaltwalze gekoppelte elektromotorische Direktantrieb modular steckbar und/oder schnellwechselbar und/oder werkzeuglos austauschbar ist.

Der bürstenlose Motor ermöglicht eine hohe Leistungsdichte und damit eine besonders kompakte Bauform, so dass auf jegliche Getriebeübersetzungsstufen zwischen Schaltwalze und Motor verzichtet werden kann. Außerdem bietet ein solch kompakter Motor hoher Leistungsdichte vielfältige Vorteile hinsichtlich des Packaging, denn es besteht ein hoher Grad an Variabilität beim Einbau des Motors, wahlweise innerhalb des Getriebegehäuses, so dass eine Wellendurchführung für den Antrieb der Schaltwalze entfallen kann.

Da außerdem solche bürstenlosen Motoren sehr präzise steuerbar sind und als Schrittmotoren eingesetzt werden können, kann ggf. auf eine Sensorik zur Erfassung eines aktuellen Drehwinkels der Schaltwalze verzichtet werden. Außerdem kann das erfindungsgemäße Wechselgetriebe ohne sog. Gangpositionssensor betrieben werden, da ein solcher entweder im elektrischen Antriebsmotor für die Schaltwalze bereits vorhanden ist oder aufgrund dessen spezifischer Eigenschaften substituiert werden kann.

Wahlweise kann bei dem Wechselgetriebe der elektromotorische Direktantrieb der Schaltwalze durch einen sog. Innenläufer-Motor gebildet sein. Hierbei befindet sich der Läufer innen, während der den Läufer umschließende Stator außen angeordnet ist. Eine sinnvolle Bauausführung eines solchen Innenläufer-Motors, der insbesondere durch einen Torquemotor gebildet sein kann, kann bspw. mit weniger Nuten als Polen ausgestattet sein, was die unerwünschten Rastungseffekte reduzieren kann. Eine Variante mit bspw. zwölf Nuten und vierzehn Polen kann diesen Zweck der sehr gering ausgeprägten Rastung erfüllen.

Wahlweise kann der elektromotorische Direktantrieb der Schaltwalze auch durch einen sog. Außenläufer-Motor gebildet sein. Hierbei befindet sich der Stator innen, während der den Stator umschließende Läufer außen angeordnet ist. Eine sinnvolle Bauausführung eines solchen Außenläufer-Motors, der insbesondere durch einen Torquemotor gebildet sein kann, kann bspw. mit weniger Nuten als Polen ausgestattet sein, was die unerwünschten Rastungseffekte reduzieren kann. Eine Variante mit bspw. zwölf Nuten und vierzehn Polen kann diesen Zweck der sehr gering ausgeprägten Rastung erfüllen.

Weiterhin kann es von Vorteil sein, bei einer Ausführungsvariante des Wechselgetriebes Leerlaufstellungen zwischen den Gängen vorzusehen, was insbesondere dadurch realisiert werden kann, dass der elektromotorische Direktantrieb der Schaltwalze jeweils Leerlaufstellungen zwischen zwei benachbarten Schaltstufen vorsieht oder vorsehen kann, insbesondere durch seine Ansteuerbarkeit.

Im Zusammenhang mit dem nachfolgend in zahlreichen Ausführungsvarianten erläuterten erfindungsgemäßen Steuerungsverfahren für das zuvor beschriebene Wechselgetriebe ist es insbesondere sinnvoll, den elektromotorischen Direktantrieb der Schaltwalze elektronisch anzusteuern, was bspw. über ein Bussystem wie etwa einen CAN-Bus o. dgl. System erfolgen kann. Eine solche Ansteuerung hat neben der präzisen Steuerbarkeit den weiteren Vorteil, dass die Ansteuerungselektronik das Verhalten des Elektromotors beeinflussen oder definieren kann.

So kann bspw. mittels einer Strombegrenzung das Antriebsmoment des Motors begrenzt oder innerhalb gewünschter Grenzen vorgegeben werden. Außerdem kann auch durch eine präzise Erfassung einer aktuellen Stromaufnahme des Antriebsmotors für die Schaltwalze das gesamte Verhalten der mit der Schaltwalze in Wirkeingriff stehenden und/oder der von der Schaltwalte betätigten Bauteile abgeleitet und erfasst werden. Diese mit der Schaltwalze in Wirkeingriff stehenden und/oder von der Schaltwalte betätigten Bauteile sind etwa die Schaltelemente oder Schaltgabeln, die von den Schaltelementen oder Schaltgabeln auf den Getriebewellen verschobenen Schiebemuffen, die wiederum durch Einwirkung der von der Schaltwalze betätigten Schaltelemente oder Schaltgabeln mit den jeweils angrenzenden Zahnrädern der Zahnradpaarungen in Eingriff bringbar sind, wodurch eine gewünschte Übersetzungsstufe des Getriebes angewählt wird.

Wie schon erwähnt, schlägt die vorliegende Erfindung ein Verfahren zur Steuerung eines drehmoment- und/oder drehzahlwandelnden Wechselgetriebes vor, wie es zuvor in verschiedenen Ausführungsvarianten bereits erläutert wurde, und wodurch die oben formulierte Aufgabe gelöst werden soll. Das mittels des erfindungsgemäßen Verfahrens steuerbare Wechselgetriebe verfügt über eine Eingangswelle und eine Ausgangswelle sowie mindestens zwei Übersetzungsstufen, denen jeweils wenigstens eine wechselbare Zahnradpaarung zugeordnet ist. Weiterhin ist das Getriebe dadurch charakterisiert, dass Schaltelemente auf Schiebemuffen wirken, die mit den Zahnradpaarungen bzw. den Zahnrädern der Zahnradpaarungen in Verbindung stehen und/oder in Wirkeingriff bringbar sind und diese wechseln können. Außerdem stehen die Schaltelemente in Eingriff mit einer in definierte Winkellagen bringbaren und zwischen diesen Winkellagen verdrehbaren Schaltwalze, wobei diese Schaltwalze mit einem elektromotorischen Direktantrieb gekoppelt ist, der die Schaltwalze zum Wechseln von Übersetzungsstufen dreht und in die jeweiligen definierten Winkellagen bringt.

Als elektromotorischer Direktantrieb für die Schaltwalze kann insbesondere ein permanenterregter Synchronmotor zum Einsatz kommen, da eine solcher Motortyp für den hier beschriebenen Einsatzzweck besonders geeignet ist.

Beim Aktivieren oder Deaktivieren einer Übersetzungsstufe und/oder beim Wechseln von Übersetzungsstufen des Wechselgetriebes werden jeweils die Trägheitsmomente des Aktuators, der Schaltwalze und der zu bewegenden Schaltgabel/Schaltgabeln berücksichtigt und in den Regelzyklus mit eingebunden. Hierfür wird die Rotationsenergie und deren zeitlich partielle Ableitung unter Berücksichtigung der Bewegung der Schaltwalze kalkuliert. Das gilt etwa beim Aufheben eines Eingriffs der Schiebemuffe mit einem Zahnrad der Zahnradpaarung einer ersten Übersetzungsstufe, bei dem die mindestens eine Schiebemuffe axial verschoben und aus dem Eingriff mit dem Zahnrad der Zahnradpaarung der ersten Übersetzungsstufe gebracht wird. Dies gilt ebenso beim Herstellen eines Eingriffes der Schiebemuffe mit einem Zahnrad der Zahnradpaarung einer zweiten Übersetzungsstufe, bei dem die Schiebemuffe ebenso axial verschoben und in den Eingriff mit dem Zahnrad der Zahnradpaarung der zweiten Übersetzungsstufe gebracht wird.

Mit Hilfe des erfindungsgemäßen Verfahrens können sehr präzise und zuverlässig reproduzierbare Schaltwechselvorgänge in einem sequentiellen Getriebe mit einem elektromagnetischen Antriebsmotor, der als Aktuator für die Schaltwalze dient, durchgeführt werden. Zudem ist das erfindungsgemäße Verfahren besonders geeignet, um die Schaltwechselvorgänge mit vergleichsweise geringen mechanischen Belastungen und damit mit geringem oder reduziertem Verschleiß durchzuführen, da insbesondere Stoßbelastungen und ausgeprägte Impulsbelastungen reduziert werden können.

Mit dem hier verwendeten Begriff der Schaltwechselvorgänge sind alle unterschiedlichen bzw. mit dem jeweiligen Getriebe praktisch durchführbaren Hoch- und Runterschaltvorgänge in unterschiedliche bzw. sich aneinander anschließende Übersetzungsstufen gemeint.

Um einen reibungslosen Schaltablauf zu ermöglichen, um fehlerhafte Abläufe während der Schaltvorgänge und eine dadurch drohende oder damit einhergehende Beschädigung der Mechanik vermeiden zu können, werden neben anderen optionalen Funktionalitäten, die weiter unten erläutert werden, zumindest die Rotationsenergien der an den Schaltwechselvorgängen beteiligten rotierenden Teile berücksichtigt. Die Rotationsenergien der rotierenden Teile sind für jedes vorhandene Getriebe dadurch ermittelbar, dass die Massen und Trägheitsmomente der rotierenden Teile bekannt sind, so dass auch miteinander im Verzahnungseingriff und/oder in drehfester Verbindung stehende Teile als Gesamtrotationskörper in ihren Massen und Massenträgheitsmomenten bekannt sind. Zudem können permanent alle Drehzahlen innerhalb des Getriebes ermittelt und/oder abgeleitet werden, etwa beruhend auf den Einflüssen durch die Schaltwalze, insbesondere durch die elektromotorisch betätigte Schaltwalze (sog. E-Schaltwalze), durch die Schaltgabeln etc.

Für die Durchführung der Schaltabläufe ist es sinnvoll, elektronische Schaltprogramme für die Schaltwalze zu verwenden, die in der Lage sind, die unterschiedlichsten Randbedingungen und Konditionen zu berücksichtigen und/oder auf unterschiedliche Kennfelder zurückzugreifen.

Bei allen durchzuführenden Schaltvorgängen in einem sequentiellen Getriebe, insbesondere bei einem sog. Dog-Ring-Getriebe, ist es notwendig, mögliche Über- und/oder Unterschwinger der Ist-Position während des Einregelns der Zielposition und somit des Zielganges so weit wie möglich zu reduzieren, da diese Zustände die Gefahr mit sich bringen, dass der Zielgang, der im vorliegenden Zusammenhang oftmals auch als zweite Übersetzungsstufe bezeichnet wird, wieder ausgerückt wird, was mit einer Beschädigung der Mechanik, insbesondere der betroffenen Schaltmuffe und/oder des damit in Eingriff stehenden oder betroffenen Dog-Rings einhergehen kann. Des Weiteren ist ein verfrühtes Abbremsen der Zahnradpaarung der Zielübersetzung, abhängig von der Regeldifferenz der Positionen, ebenfalls nicht sinnvoll, da dies gleichermaßen zu einer Beschädigung während des Einrückens des Ganges führen kann und zudem auch noch einen deutlichen Verlust in der Schaltperformance mit sich bringen kann.

Wie oben bereits erläutert, weisen die Dog-Ringe von sequentiellen Getrieben eine vergleichsweise geringe Anzahl von Zähnen auf, die zudem Hinterschneidungen aufweisen, so dass ein vergleichsweise harter Eingriff zwischen den korrespondierenden Verzahnungen der Schaltmuffen und der daran angrenzenden stirnseitigen Dog-Ringe der Zahnräder der verschiedenen Übersetzungsstufen erfolgt und für einen erfolgreichen Schaltvorgang auch erfolgen muss.

Unter Nutzung ausreichend schnell arbeitender Steuer- und Regeleinrichtungen wird beim erfindungsgemäßen Verfahren zu jeder Zeit die Rotationsenergie kalkuliert, die sowohl im Aktuator, d.h. in der Schaltwalze und in ihrem Antriebsmotor, als auch in den bewegten und in den rotierenden Teilen des Getriebes vorhanden ist, wodurch über einen Algorithmus eine annähernd ideale Verzögerung und ein idealer Bremspunkt für jeden zu schaltenden Gang ermittelt werden kann, da das Regelprogramm an Hand der jeweils vorhandenen und/oder zu erwartenden Rotationsenergie die zukünftige Position der Zahnflanken und Eingriffspunkte der Dog-Ringe vorausberechnen oder zumindest abschätzen kann.

Je nach verwendeter Bauart des für den Schaltwalzenantriebs verwendeten elektromotorischen Antriebs kann für eine gezielte Regelung der Rotationsenergie sowie des bereitgestellten Drehmoments des Elektroantriebes eine feldorientierte Regelung, die auch als Vektorregelung bezeichnet wird, in den Regelalgorithmus miteinbezogen werden. Hierbei kann durch eine gezielte Überlagerung der feldorientierten Regelung mit der sog. Raumzeigermodulation eine verbesserte und im Idealfall eine optimale Leistungseffizienz erreicht werden. Das hier lediglich angedeutete Verfahren dient einer optimalen Drehmomentproduktion oder Drehmomentübertragung sowie einer effektiven Blindleistungskompensation.

Über verschiedene Tabellen können Faktoren eingestellt werden um den Bremsalgorithmus für die jeweilige Anwendung auszuwählen und zu applizieren. Sobald der Bremsalgorithmus des erfindungsgemäßen Systems aktiviert wird, berechnet dieser einen zusätzlichen Vektor, welcher auf den Feldvektor des eigentlichen Standardreglers aufaddiert wird. Somit dient das System als Verstärker für den eigentlichen Regelzyklus.

Wahlweise können beim erfindungsgemäßen Verfahren die Rotationsenergien der mit den jeweiligen Zahnrädern, die an einem Wechseln einer jeweiligen Übersetzungsstufe beteiligt sind, in Eingriff befindlichen rotierenden Teile berücksichtigt werden. Wie oben schon erläutert, ist diese Option sinnvoll, da ansonsten sich addierende Rotationsenergien mehrerer miteinander im Eingriff stehender Rotationskörper unter Umständen unberücksichtigt blieben.

Zudem können die Rotationsenergien für unterschiedliche Übersetzungsstufen jeweils unterschiedlich gewichtet und/oder aus Tabellen oder Kennfeldern entnommen und jeweils unterschiedlich berücksichtigt werden. Damit ist die Möglichkeit gegeben, die verwendeten Parameter für jeden Gangwechsel separat anzupassen, da die Trägheitsmomente zwischen verschiedenen Gangpaaren in aller Regel unterschiedlich sind, wodurch auch die Rotationsenergien unterschiedlich sind.

Eine sinnvolle Variante des erfindungsgemäßen Verfahrens kann vorsehen, dass die Rotationsenergien der Schaltwalze und/oder der die Schaltwalze antreibenden elektromotorischen Direktantriebes ergänzend oder separat berücksichtigt werden.

Um das Verfahren effektiv durchführen zu können, wird es in aller Regel notwendig sein, den elektromotorischen Direktantrieb der Schaltwalze mit einer Antriebssteuerung eines Antriebsmotors elektronisch zu koppeln, damit die Drehmomentanforderungen, die für Wechselvorgänge erforderlich sind, in abgestimmter Weise durch den Antriebsmotor durchführbar sind, insbesondere im Zusammenhang mit den notwendigen schnellen und oftmals auch kupplungslos durchgeführten Schaltvorgängen.

Das Verfahren kann gemäß einer weiteren Ausführungsvariante vorsehen, dass während und/oder in Vorbereitung eines Ausrückvorganges einer Schiebemuffe von einem Zahnrad einer zu deaktivierenden ersten Übersetzungsstufe, die auch als Initialgang bezeichnet wird, ein Antriebsmoment des Antriebsmotors reduziert wird. Dies dient insbesondere dazu, die Schiebemuffe mit reduzierter Ausrückkraft ausrücken zu können, d.h. der Antrieb ist vorzugsweise weitgehend lastfrei in diesen Zeiträumen.

Während des Ausrückvorganges kann es sinnvoll sein, die mit der Schiebemuffe in Wirkeingriff befindliche Schaltgabel mit definierter und/oder veränderlicher Vorspannkraft vorzuspannen, d.h. mit definierter Steigung kontinuierlich stärker vorzuspannen, wobei die Vorspannkraft geringer ist als eine Schaltkraft, die erst bei lastfreiem Antriebsstrang auf die Schaltgabel ausgeübt wird. Damit kann die Federwirkung, die aus der Elastizität der Schaltgabel resultiert, unterdrückt werden, was ein Zurückprellen der Schiebemuffe durch eine elastisch vorgespannte Schaltgabel, die sich wie eine Feder verhält, im Idealfall effektiv verhindern kann.

Nach einer gültigen Schaltanforderung, die vom Steuerungssystem auf Plausibilität und auf Durchführbarkeit geprüft wurde, ist der erste Vorgang, welcher vom Aktuator ausgeführt werden muss, das Ausrücken des Initialganges. Hierfür fordert die Steuerung einen sogenannten Cut von der Motorsteuerung des mit dem Wechselgetriebe gekoppelten Antriebsmotors an. Mit dieser Funktionalität wird der Antriebsstrang weitgehend drehmomentfrei gemacht, indem der Antriebsmotor das treibende Drehmoment reduziert oder komplett auf einen Wert von Null zurückstuft. Dieser Schritt ist notwendig, um eine Trennung der Dogs bzw. der Schaltmuffen vom Gangrad durchzuführen und einen Gang ohne Kupplungsbetätigung auszurücken.

Je nach Qualität der Motoransteuerung, des Antriebsmotors und des angestellten Arbeitspunktes vergeht eine Zeitspanne, bis der Motor das Drehmoment in dem jeweils notwendigen Ausmaß abbauen kann und das System lastfrei ist. Oftmals wird der Schaltvorgang jedoch schon in diesem Zeitraum aktiviert und der Schaltaktuator versucht den noch mit Drehmoment belasteten Gang auszurücken. Dies führt dazu, dass die Schaltgabel des Gangpaares vorgespannt wird, da der Schaltaktuator ebenfalls eine Kraft aufbaut, um den Gang auszurücken. Wird sodann der Antriebsgang drehmomentfrei, kann es vorkommen, dass sich die Schaltgabel wie eine Federkomponente verhält und komplett in den Initialgang zurückspringt. Dies führt zu einem Verlust in der Schaltperformance und kann zu mechanischen Beschädigungen führen.

Die oben genannte Verfahrensvariante verhindert ein solches Verhalten, indem das Drehmoment, welches der Schaltaktuator auf die Schaltgabel gibt, wenn der Antriebsstrang noch nicht drehmomentfrei ist, mit einer definierten Steigung erhöht und auf einem definierten Level gehalten wird, so dass nicht die komplette Kraft des Aktuators auf die Schaltgabel übertragen wird. Dadurch kommt die Federwirkung der Schaltgabel nicht zum Tragen und der Gang kann ohne Rückprellen ausgerückt werden, wenn das System drehmomentfrei ist. Nachdem der Gang erfolgreich ausgerückt wurde, wird dieser Verfahrensmodus beendet, und das System kann in den normalen Schaltablauf zurückwechseln.

Weiterhin kann das Verfahren vorsehen, dass der Ausrückvorgang nach einer Schaltanforderung mit definierter Verzögerung und in Abstimmung auf das Verhalten des zuvor in seinem Antriebsmoment reduzierten Antriebsmotors erfolgt. Vorzugsweise kann damit eine verbesserte Abstimmung auf den typischen Abtourvorgang des jeweiligen Antriebsmotors erreicht werden, da eine zu frühzeitige Aktivierung nur zu einem ansonsten wirkungslosen Vorspannen der Schaltgabel führt, was jedoch zu einer unerwünschten Leistungsaufnahme des Schaltantriebes für die Schaltwalze und zu dessen unnötiger Erwärmung führen würde.

Wenn hier von einem sog. Abtourvorgang die Rede ist, so sind damit Drehzahlreduzierungen gemeint, die nach einer Verringerung einer Leistungs- oder Drehzahlanforderung erfolgen. Dieser Abfall der Motordrehzahl erfolgt nicht schlagartig, nachdem eine Leistungs- oder Drehzahlanforderung zurückgenommen wurde, da zahlreiche Trägheitsmomente der sich drehenden Teile für einen allmählichen Rückgang der Motordrehzahl sorgen. Je geringer die insgesamt wirksamen Schwungmassen sind, desto schneller kann ein Motor abtouren, wenn seine Drehzahl- oder Leistungsanforderung zurückgenommen wurde.

Umgekehrt gelten im Wesentlichen dieselben Gesetzmäßigkeiten, so dass eine Drehzahlsteigerung aufgrund der wirksamen Massenschwungkräfte nur mit gewisser Verzögerung erfolgen kann. Um diese Trägheiten zu reduzieren, ist es im motorsportlichen Einsatz üblich, solche relativ schweren rotierenden Teile wie etwa ein mit der Motorkurbelwelle eines Verbrennungsmotors verbundenes Kupplungsschwungrad zu erleichtern, wodurch sowohl eine Abtourzeit reduziert wie auch eine plötzliche Drehzahlsteigerung deutlich beschleunigt werden kann.

Wenn ein Schaltvorgang gestartet wird, bekommt die Schaltwalze eine entsprechende Anforderung, so dass die als Aktuator fungierende Schaltwalze mit dem Ausrückvorgang des Initialganges beginnen kann. Unabhängig davon, ob dieser mit der oben erläuterten allmählichen Vorspannung der Schaltgabel oder ohne eine solche Vorspannung durchgeführt wird, kann es hierbei passieren, dass der Antriebsstrang noch nicht lastfrei ist, weil etwa der als Fahrzeugantrieb eingesetzte Verbrennungs- oder Elektromotor noch eine definierte Zeitspanne benötigt, bis der Arbeitspunkt für ein drehmomentfreies Verhalten des Antriebstranges eingestellt werden kann.

Abhängig von Applikation und Bauart des jeweils als Antriebsmotor für ein Fahrzeug eingesetzten Verbrennungs- oder Elektromotors beträgt diese Zeitspanne ggf. mehrere Millisekunden, in denen ein Ausrückvorgang unmöglich ist und der Aktuator unnötig Arbeitsaufwand betreibt. Der Elektromotor des Aktuators, d.h. der Antriebsmotor für die Schaltwalze, verwendet hierbei eine definierte Leistungsaufnahme.

Da die Auswirkungen eines aufgrund zu starker Vorspannung in den zu bewegenden Teilen nicht durchführbaren Schaltvorganges nach Möglichkeit reduziert oder komplett vermieden werden sollten, bietet das vorliegende Verfahren optional die Möglichkeit, für jeden definierten Schaltvorgang eine Zeitspanne vorzugeben, welche der Aktuator mit dem Ausrückvorgang wartet, nachdem die Schaltanforderung eingegangen ist. Diese Option ermöglicht es, den mittleren Leistungsverbrauch und die Erwärmung des Aktuators, welche hiermit verbunden ist, deutlich zu reduzieren.

Weiterhin kann das Verfahren gemäß einer weiteren Ausführungsvariante vorsehen, dass zur Vorbereitung oder während eines Einrückvorganges die zuvor aus dem Eingriff mit dem Zahnrad der deaktivierten ersten Übersetzungsstufe gebrachte Schiebemuffe bei ihrer Annäherung an ein benachbartes Zahnrad einer zu aktivierenden zweiten Übersetzungsstufe nach einer formschlüssigen Passung gesucht wird, indem ein Drehmoment- und/oder Drehzahlverlauf des elektromotorischen Direktantriebes der Schaltwalze erfasst und daraus erkannt wird, ob die Schiebemuffe den Eingriff mit dem Zahnrad der zu aktivierenden zweiten Übersetzungsstufe hergestellt hat. Hierbei wird beim Bewegen eines Dog-Rings bzw. einer Schiebemuffe in Richtung zu einem Zahnrad eines Zielganges versucht, die jeweils passende "Lücke" zu treffen, um die Dog-Ringe ineinandergreifen zu lassen. Gleichzeitig kann durch Erfassung des Drehzahlverlaufs und der Stromaufnahme im Antriebsmotor für die Schaltwalze erkannt werden, ob der Dog "greift" und einspurt oder "zurückspringt", was als Impuls über die Schaltgabel übertragen und in die Schaltwalze eingeleitet wird.

Im Verlaufe jedes Schaltvorganges besteht grundsätzlich eine gegebene Wahrscheinlichkeit, einen sog. Dog des Zielganges zu treffen. Die mit den Dogs der Schaltmuffe korrespondierenden Dogs des Zielganges sind an dem Zahnkranz des Zielganges montiert und sind somit Teil der rotierenden Komponenten des Getriebes. An einem Getriebegang sind mehrere Dogs in einem Winkelabstand befestigt, um diesen zu verkürzen. Der Abstand zwischen zwei Dogs, welche einen gemeinsamen Winkel aufspannen, wird Dogfenster genannt.

Der an der Schaltmuffe befindliche Dog, welcher mit der Schaltgabel in den Zielgang bewegt wird, ist mechanisch von den Dogringen der Gänge getrennt und muss, um einen Gang einzulegen, in ein Dogfenster des Zielganges transportiert werden. Trifft der Dog der Schaltmuffe auf einen Dog des Zielganges während der Einspurphase, so wird hierbei ein Impuls umgesetzt, welcher dazu führt, dass Energie in die Schaltgabel übertragen wird. Je nach Energieeintrag kann es dazu kommen, dass der translatorische Vektor der Schaltgabel invertiert wird und der Zielgang wieder Richtung Initialgang ausgerückt wird. Dieser Vorgang kann auch als Dog-to-Dog-Ereignis betrachtet und soll im vorliegenden Zusammenhang auch als solches Dog-to-Dog-Ereignis bezeichnet werden.

Es hat sich erwiesen, dass diese als Dog-to-Dog-Ereignisse bezeichneten fehlerhaften Einspurvorgänge bei jeglichen Schaltvorgängen relativ häufig auftreten können. Da diese Ereignisse jeweils zu ausgeprägten Unstetigkeiten in den Regelabläufen führen, ist es sinnvoll, solche Dog-to-Dog-Ereignisse zu detektieren, um sinnvolle Gegenmaßnahmen einleiten zu können.

Hierfür sieht das erfindungsgemäße Verfahren einen spezifischen Algorithmus vor, welcher parallel als Sub-Element des eigentlichen Schaltablaufes agiert und anhand der Drehzahl und Bewegungsrichtung des Stellers bzw. von der Schaltwalze betätigten Schaltelementes oder der von der Schaltwalze bewegten Schaltgabel ein solches Dog-to-Dog-Ereignis erkennt. Diese Erkennung kann ggf. indirekt über die Analyse der Stromaufnahme und des Drehzahlverlauf beim Antrieb der Schaltwalze erfolgen, da die spezifischen Eigenschaften solcher Dog-to-Dog-Ereignisse recht genau ermittelbar und damit auch im normalen Schaltablauf erkennbar sind.

Eine weitere vorteilhafte Verfahrensoption kann vorsehen, dass nach Auftreten eines Dog-to-Dog-Ereignisses und damit eines nicht erfolgreichen Einrückvorganges und/oder nach einem erfolglosem Versuch der Herstellung eines Eingriffes zwischen Schiebemuffe und Zahnrad der zu aktivierenden zweiten Übersetzungsstufe der Einrückvorgang durch entsprechende Rückdrehung und nochmalige Drehung der Schaltwalze mit entsprechend geführter Schaltgabel mindestens einmal, vorzugsweise mehrfach wiederholt wird. Im Steuerprogramm kann diese Verfahrensvariante auch dadurch charakterisiert werden, dass nach Erkennung einer Invertierung des translatorischen Vektors der Schaltgabel und damit einhergehender Ausrückung des Dogs vom Zielgang weg wieder Richtung Initialgang eine Wiederholung der Abläufe des Schaltvorganges initiiert wird.

Wie oft solche fehlerhaften Schaltvorgänge sinnvollerweise wiederholt werden, hängt von der jeweiligen Programmierung und auch von der im Programm abgebildeten Schaltphilosophie ab. Eine gewisse Anzahl an zugelassenen Wiederholungen kann hierbei durchaus sinnvoll sein, um die Schaltung unter möglichst allen auftretenden äußeren Umständen funktionstüchtig zu halten. Allerdings kann eine zu große Anzahl an zugelassenen Wiederholungen ggf. auch zu Beschädigungen führen, wenn damit bspw. andere fehlerhafte Erscheinungen übergangen oder ignoriert werden.

Wahlweise kann das Verfahren auch vorsehen, dass ein nicht erfolgreicher Einrückvorgang und/oder ein erfolgloser Versuch der Herstellung eines Eingriffes zwischen Schiebemuffe und Zahnrad der zu aktivierenden zweiten Übersetzungsstufe zu weitergehenden Analysevorgängen führt. So kann etwa ein Dog-to-Dog-Ereignis und ein nicht erfolgreicher Einrückvorgang zumindest auf Grundlage der Erfassung der Drehzahlen des Zahnrades oder der Zahnräder der zweiten Übersetzungsstufe und/oder auf Grundlage der Erfassung der Drehgeschwindigkeit und/oder des Drehwinkels der Schaltwelle und/oder des für die Drehung der Schaltwelle aufzubringenden Antriebsmoments des elektromotorischen Direktantriebes erfasst und/oder erkannt werden.

Es ist sinnvoll, eine solche Dog-to-Dog-Erkennung auf Grundlage der Drehzahlen der Zahnräder, der Schaltwelle und des Antriebsdrehmoments für die Drehung der Schaltwelle durchzuführen, wobei überprüft wird, ob sich in einem gewissen Winkelfenster des Stellers die Drehrichtung während der Bewegung invertiert, oder ob der Gradient der Drehzahl eine deutliche Unstetigkeit aufweist. Ist dies der Fall, so sendet der Algorithmus eine Information an alle anderen Komponenten der Software, dass ein Schaltvorgang sinnvollerweise neu zu starten und zu wiederholen ist.

Grundsätzlich ist es sinnvoll, schon bei Erkennung eines Dog-to-Dog-Ereignisses den Stellvorgang frühzeitig zu unterbrechen und die zuvor invertierte "Rück"-Stellbewegung der Schaltgabel wieder möglichst schnell umzukehren, um einen erneuten Schaltvorgang zu versuchen. Auf diese Weise kann ein Teil der aufgewendeten Stellenergie, welche durch den Impuls übertragen wurde, umgewandelt werden, um den Bewegungs-Vektor der Schaltgabel und der von dieser bewegten Schiebemuffe wieder in Richtung Zielgang zu lenken. Diese Erkennungsschritte wiederholen sich ggf. mehrfach, wobei nicht immer identische Wiederholungsprozesse aufeinanderfolgen müssen, denn die Schaltvorgänge können zu unterschiedlichen Zeitpunkten abgebrochen worden sein. Allerdings werden wieder im Wesentlichen dieselben Maßnahmen wiederholt getroffen, wenn der Zielgang erneut eingerückt werden soll.

Weiterhin kann beim erfindungsgemäßen Verfahren vorgesehen sein, dass im Zusammenhang mit einem nicht vollständigen Einrückvorgang und einer ggf. damit einhergehender Verklemmung und/oder einem damit einhergehenden Verhaken der Schiebemuffe mit dem Zahnrad der zweiten Übersetzungsstufe zumindest die Bewegungsgeschwindigkeit und der Bewegungsverlauf der Schaltgabel und/oder der diese ansteuernde Schaltwalze erfasst und analysiert werden.

Wenn somit im Zusammenhang mit einem Dog-to-Dog-Ereignis eine Pressverbindung oder Presspassung an Dogkanten auftritt, weil die Schaltgabel weiterhin andrückt, ohne dass der Dog tatsächlich eingerückt werden konnte, so kann dies durch Erfassung der Geschwindigkeiten und Bewegungsverläufe des Schaltelements bzw. der Schaltgabel bzw. der mit dieser in Verbindung stehenden Schaltwalze erkannt und entsprechende Gegenmaßnahmen eingeleitet werden. Da eine solche Pressverbindung durch den oben beschriebenen Schaltablauf und die oben beschriebene Handhabung von Dog-to-Dog-Ereignissen nicht zuverlässig aufgelöst werden kann, können weitere Erkennungs- und Abhilfeschritte erforderlich sein.

Um ein solches spezifisches Dog-to-Dog-Ereignis erkennen zu können, das insbesondere durch eine auftretende mechanische Pressverbindung charakterisiert sein kann, werden mindestens zwei, sinnvollerweise jedoch insgesamt drei Bedingungen abgefragt. Zunächst wird überprüft, ob ein Dog-to-Dog-Ereignis vorliegt. Außerdem kann abgefragt und erkannt werden, ob das Schaltelement oder die Schaltgabel langsamer bewegt wurde als dies normalerweise zu erwarten gewesen wäre. Als drittes Kriterium kann erfasst werden, ob die zu niedrige Drehzahl der für die Bewegung des Schaltelements oder der Schaltgabel aktivierte Schaltwalze über einen bestimmten Zeitraum auf diesem niedrigen Niveau bleibt.

Um einem solchen Ereignis zu begegnen, wurden insbesondere zwei unterschiedliche Strategien entwickelt, die nachfolgend genauer erläutert werden.

Als eine Option, einem solchen spezifischen Dog-to-Dog-Ereignis zu begegnen, das auch als "langes" Dog-to-Dog-Ereignis betrachtet werden kann, bietet das Verfahren die Möglichkeit, im Zusammenhang mit einem nicht vollständigen Einrückvorgang und damit einhergehender Verklemmung und/oder Verhakung der Schiebemuffe mit dem Zahnrad der zweiten Übersetzungsstufe eine Stellkraft und/oder eine Verdrehgeschwindigkeit der Schaltwalze mindestens einmal oder auch mehrfach zu reduzieren und/oder oszillierend zu variieren. Um somit ein solches sog. "Long"-Dog-to-Dog-Ereignis aufzulösen, kann der Steller oder die Schaltwalze in kurzen Intervallen seine/ihre Stellkraft reduzieren, welche auf die Schaltgabel ausgeübt wird, wodurch ggf. die mechanische Koppelung getrennt werden kann.

Als eine weitere Option, einem solchen spezifischen Dog-to-Dog-Ereignis zu begegnen, das auch als "langes" Dog-to-Dog-Ereignis betrachtet werden kann, bietet das Verfahren die Möglichkeit, im Zusammenhang mit einem nicht vollständigen Einrückvorgang und damit einhergehender Verklemmung und/oder Verhakung der Schiebemuffe mit dem Zahnrad der zweiten Übersetzungsstufe eine Verdrehgeschwindigkeit der Schaltwalze einfach oder mehrfach zu reduzieren und/oder zu invertieren. Um ein solches "Long"-Dog-to-Dog-Ereignis aufzulösen, kann es sinnvoll sein, die Schaltgabel aktiv vom Dog des Zielganges wegzubewegen und in Richtung zurück zum Initialgang zu bewegen, um aktiv eine Trennung der mechanischen Koppelung zu erzwingen und dann einen erneuten Einrückvorgang zu starten.

Vorzugsweise bewegt sich der Steller aber hierbei nicht sehr weit zurück, sondern nur ein kleines Stück vom Zielgang weg, und zwar zumindest soweit, dass eine Trennung des mit der Schaltgabel verschiebbaren Dogrings vom Dog des Zielganges sichergestellt werden kann, um danach einen erneuten Einrückvorgang zu beginnen.

Ein weiteres unerwünschtes Ereignis, das im Zusammenhang mit den oben in zahlreichen Varianten erläuterten Dog-to-Dog-Ereignissen zu sehen ist, kann als Zurückspringen, als Prellen oder als sog. "Bouncing" bezeichnet und betrachtet werden. Hierbei handelt es sich um ein spezifisches Dog-to-Dog-Ereignis, bei dem der Dogring nach beinahe abgeschlossenem Schaltvorgang wieder soweit zurückfedert, dass wieder der Initialgang eingerückt wird.

Somit kann bei einer sinnvollen Verfahrensvariante abgefragt werden, ob im Zusammenhang mit einem nahezu vollständigen oder vollständigen Einrückvorgang und damit einhergehender Passung der Schiebemuffe mit dem Zahnrad der zweiten Übersetzungsstufe eine unerwartete Zurückbewegung der Schiebemuffe aus der Passung mit dem Zahnrad der zweiten Übersetzungsstufe in das Zahnrad der ausgerückten ersten Übersetzungsstufe erfolgt. Um zu überprüfen, ob dies der Fall ist, ob also das sog. "Bouncing" auftritt, werden zumindest die Bewegungsgeschwindigkeit und der Bewegungsverlauf der Schaltgabel und/oder der diese ansteuernde Schaltwalze erfasst und analysiert.

Hierbei ist zu betonen, dass ein solcher Vorrang, bei dem die zurückfedernde Schaltgabel so viel Energie gespeichert hat, dass der Initialgang wieder getroffen wird, wegen der vergleichsweise hohen Beschädigungsgefahr vermieden werden sollte.

Im Zusammenhang mit einem "Bouncing", also einem spezifischen Dog-to-Dog-Ereignis kann eine sinnvolle Verfahrensvariante außerdem erfassen und überprüfen, ob im Zusammenhang mit einem nicht vollständigen Einrückvorgang und damit einhergehender Verklemmung und/oder Verhakung der Schiebemuffe mit dem Zahnrad der zweiten Übersetzungsstufe eine Zurückbewegung der Schiebemuffe aus der Passung mit dem Zahnrad der zweiten Übersetzungsstufe in das Zahnrad der ausgerückten ersten Übersetzungsstufe erfolgt ist. Ist dies der Fall, werden zumindest die Bewegungsgeschwindigkeit und der Bewegungsverlauf der Schaltgabel und/oder der diese ansteuernde Schaltwalze erfasst und analysiert.

Um ein solches "Bouncing" zuverlässig zu erkennen, beobachtet ein separater Algorithmus jedes Dog-to-Dog-Ereignis auf seine Impulsübertragung und hinsichtlich des von der Schaltgabel zurückgelegten Weges, und detektiert solchermaßen die Gefahr des Bouncing. Um Beschädigungen im Getriebe zu vermeiden, wird bei der Gefahr eines Bouncing vergleichsweise schnell reagiert, um die auftretenden Impulse rechtzeitig abzuschwächen. Auf diese Weise kann in aller Regel verhindert werden, dass das schadensträchtige Rückkoppeln in den Initialgang erfolgt.

Neben den vielfältigen Erscheinungen beim Wechseln von Übersetzungsstufen, wie sie oben erläutert wurden, kann es in bestimmten, wenn auch seltenen Situationen dazu kommen, dass ein Überschwingen bei dem Einregeln der Zielposition entsteht. Ein solcher Überschwingvorgang ähnelt in seinen charakteristischen Begleiterscheinungen stark dem zuvor erläuterten "Bouncing". Wird etwa aufgrund eines auftretenden und erkannten Dog-to-Dog-Ereignisses ein stärkerer Impuls auf die Schaltgabel gegeben, so kann es anschließend zum Überschwingen kommen, was ein ungewolltes Wiederausrücken der Dogring-Verbindung zur Folge haben kann. Daraus resultiert ein fehlerhafter Schaltvorgang, oftmals auch als sog. "Misshift" bezeichnet.

Somit kann eine weitere Verfahrensvariante vorsehen, dass im Zusammenhang mit einem nicht vollständigen Einrückvorgang und damit einhergehender Verklemmung und/oder Verhakung der Schiebemuffe mit dem Zahnrad der zweiten Übersetzungsstufe und nach einer Zurückbewegung der Schiebemuffe aus der Passung mit dem Zahnrad der zweiten Übersetzungsstufe ohne Herstellung eines Eingriffes mit dem Zahnrad der ausgerückten ersten Übersetzungsstufe zumindest die Bewegungsgeschwindigkeit und der Bewegungsverlauf der Schaltgabel und/oder der diese ansteuernde Schaltwalze erfasst und analysiert werden.

Wahlweise kann eine leicht abgewandelte Verfahrensvariante vorsehen, dass im Zusammenhang mit einem nahezu vollständigen oder vollständigen Einrückvorgang und damit einhergehender Passung der Schiebemuffe mit dem Zahnrad der zweiten Übersetzungsstufe und nach einer Zurückbewegung der Schiebemuffe aus der Passung mit dem Zahnrad der zweiten Übersetzungsstufe ohne Herstellung eines Eingriffes mit dem Zahnrad der ausgerückten ersten Übersetzungsstufe zumindest die Bewegungsgeschwindigkeit und der Bewegungsverlauf der Schaltgabel und/oder der diese ansteuernde Schaltwalze erfasst und analysiert werden.

Nach Erkennung eines Überschwingens kann in geeigneter Weise gegengesteuert werden. So werden im Zusammenhang mit geeigneten Gegensteuermaßnahmen ständig die Positionen der Schaltgabel und/oder der von dieser bewegten Schiebemuffe beim Einrücken des Zielganges überprüft, um rechtzeitig intervenieren zu können, sobald die festgestellte Ist-Position zu weit von einer Soll-Position abweicht, und zwar in typischen Bereichen, wo ein Überschwingen auftreten kann oder entstanden ist. Werden Abweichungen zwischen Ist- und Soll-Positionen erkannt, die einen Grenzwert übersteigen, so kann die passende Soll-Position aktiv angesteuert werden, was mit Hilfe eines passenden Steuervektors erfolgen kann, welcher dafür sorgt, dass in sehr kurzer Zeit bzw. sehr performant die Soll-Position wieder erreicht wird, bevor ein ungewolltes Ausrücken der Dogring-Verbindung stattfinden kann.

Wahlweise kann auch nach einer erkannten Zurückbewegung der Schiebemuffe aus der Passung mit dem Zahnrad der zweiten Übersetzungsstufe ein verstärkter und/oder verlängerter und/oder zumindest teilweise oder abschnittsweise wiederholter Schaltimpuls für die Bewegung der Schaltgabel vom elektromotorischen Direktantrieb für die Schaltwalze initiiert werden.

Ebenso kann es in seltenen Fällen dazu kommen, dass ein aufgebrachter Stellimpuls und/oder ein Bewegungsimpuls der an dem Schaltvorgang beteiligten Stellelemente zu gering ist, um den gewünschten Zielgang zu erreichen, was als Unterschwingen betrachtet werden kann. Ein solcher Stellimpuls kann im Wesentlichen von den beweglichen Teilen im Getriebe abhängen, die an translatorischen Bewegungen im Zusammenhang mit Stell- und/oder Gangwechselvorgängen beteiligt sind.

Sowohl ein Überschwingen als auch ein Unterschwingen sollte vermieden werden, weshalb jeweils eine geeignete Abhilfe geschaffen werden sollte. Ein solches Unterschwingen bzw. ein solcher sog. "Undershoot" kann als "Kriechen" der Schaltmuffe oder der diese verschiebende Schaltgabel in den Zielgang betrachtet werden.

Eine entsprechende Verfahrensvariante kann vorsehen, dass durch Erfassung und Auswertung der in den Zahnradpaarungen und/oder in der Schaltwalze gespeicherten Rotationsenergien eine unterhalb einer definierten Mindestschaltgeschwindigkeit liegende Verschiebegeschwindigkeit der Schiebemuffe erkannt und eine Umdrehungsgeschwindigkeit der Zahnradpaarung der in Eingriff zu bringenden zweiten Übersetzungsstufe erhöht wird. Um hier Abhilfe zu schaffen, wird bei der Stellbewegung auf die Schaltgabel oder auf die Schiebemuffe eine Vektordifferenz hinzugegeben, was als sog. Undershoot-Handling bezeichnet werden kann.

Darüber hinaus kann dem Unterschwingen oder Undershoot auch dadurch begegnet werden, dass die Zahnräder beschleunigt werden, um die benötigte Rotationsenergie aufzubringen, um solchermaßen mit gewünschtem Impuls in den Zielgang einzurücken. Dies ist deshalb sinnvoll, da auf diese Weise der Einrückvorgang beendet werden kann, bevor ein weiterer Dogtreffer dazu führen könnte, dass das System wieder ausspurt.

Zudem sieht eine weitere vorteilhafte Verfahrensvariante vor, dass im Zusammenhang mit einzelnen, mit ausgewählten oder mit allen durchgeführten Wechselvorgängen von Übersetzungsstufen jeweils eine Stromaufnahme des elektromotorischen Direktantriebes der Schaltwalze erfasst und ausgewertet wird. Da es in technischer Hinsicht generell möglich und sinnvoll ist, bei allen Gangwechselvorgängen die Stromaufnahme des Antriebsmotors für die Schaltwalze zu erfassen, kann diese Überwachung vorteilhaft genutzt werden, um eine mechanische Überlastung anhand einer Überschreitung eines Grenzwertes für die Stromaufnahme zu erkennen.

Damit ist eine Funktion beim erfindungsgemäßen Verfahren und bei der Getriebesteuerung geschaffen, um zumindest die elektronischen Bauteile sowie die elektrischen Komponenten vor einer Überbelastung durch zu hohe elektrische Ströme zu schützen.

Eine Variante des Verfahrens kann vorsehen, dass während der Erfassung der Stromaufnahme des elektromotorischen Direktantriebes der Schaltwalze das Über- oder Unterschreiten eines definierten Schwellwertes überwacht wird, wobei nach Überschreitung des Schwellwertes ein Stromintegral errechnet wird, das bei einer nachfolgenden Unterschreitung des Schwellwertes wieder auf einen Wert von Null gesetzt wird. Hierbei wird permanent der Strom gemessen, der durch die Motorwicklungen und die Leistungs-/Ansteuerelektronik fließt und überprüft, ob ein Schwellwert erreicht wird; wird der Schwellwert erreicht oder überschritten, wird ein Stromintegral gebildet, das bei Unterschreiten des Schwellwertes wieder auf einen Wert von Null gesetzt wird.

Außerdem kann bei einer weiteren Variante des Verfahrens eine fortlaufende Berechnung des Stromintegrals erfolgen, so dass nach Überschreiten eines Grenzwertes zumindest die Antriebssteuerung der Schaltwalze unterbrochen und damit weitere Schaltvorgänge unterdrückt werden. In diesem Zusammenhang und nach Überschreiten des definierbaren Grenzwertes kann die ganze Steuerung abgeschaltet werden, um auf diese Weise Überlastungen zu verhindern.

Zudem kann es sinnvoll sein, nach Ablauf eines definierten Zeitintervalls die Antriebssteuerung der Schaltwalze erneut zu aktivieren. Hierbei kann nach Zeitablauf einer definierten Zeit die Steuerung wieder freigegeben werden, da dann angenommen werden kann, dass die Steuerung wieder abgekühlt und bereit zum Weiterarbeiten ist.

Bei dem Verfahren kann jedoch auch vorgesehen sein, dass nach nochmaligem oder nach mehrfach wiederholtem Auftreten dieser Notabschaltung eine dauerhafte Notabschaltung erfolgen kann oder soll, da in solchen Fällen davon ausgegangen werden kann oder muss, dass eine Beschädigung in der Mechanik und/oder in der Steuerung vorliegt.

Alle oben erläuterten Ereignisse, Auffälligkeiten im Schaltablauf oder alle auftretenden Fehler können zudem protokolliert werden, da jedem Fehlerfall eine definierte Identifikationsnummer zugewiesen kann, so dass somit unzweifelhaft und eindeutig dem Nutzer oder einem Auswertesystem mitgeteilt werden kann, zu welchem Zeitpunkt welcher Fehler oder welches Ereignis aufgetreten ist.

Zur Lösung der zuvor bereits genannten Aufgaben schlägt die vorliegende Erfindung neben dem in zahlreichen Varianten erläuterten Verfahren außerdem ein drehmoment- und/oder drehzahlwandelndes Wechselgetriebe vor, das über eine Eingangswelle und eine Ausgangswelle sowie mindestens zwei Übersetzungsstufen verfügt, denen jeweils wenigstens eine wechselbare Zahnradpaarung zugeordnet ist. Bei dem Wechselgetriebe wirken Schaltelemente auf Schiebemuffen, die mit den Zahnradpaarungen bzw. den Zahnrädern der Zahnradpaarungen in Verbindung stehen und/oder in Wirkeingriff bringbar sind und diese wechseln können, wobei die Schaltelemente in Eingriff mit einer in definierte Winkellagen bringbaren und zwischen diesen Winkellagen verdrehbaren Schaltwalze stehen.

Die Schaltwalze ist mit einem insbesondere durch einen bürstenlosen Gleichstrommotor oder durch einen permanenterregten Synchronmotor gebildeten elektromotorischen Direktantrieb gekoppelt, der ausgestaltet ist die Schaltwalze zum Wechseln von Übersetzungsstufen zu drehen und in die jeweiligen definierten Winkellagen zu bringen. Außerdem ist dem elektromotorischen Direktantrieb der Schaltwalze mindestens eine Einrichtung und/oder ein Sensor zur Erfassung der elektrischen Versorgungsströme bei Betätigungen der Schaltwalze im Zusammenhang mit Wechselvorgängen von Übersetzungsstufen zugeordnet. Auf diese Weise kann die Steuerung der Wechselvorgänge von Übersetzungsstufen zumindest auf Grundlage der erfassten Versorgungsströme des elektromotorischen Direktantriebes der Schaltwalze unter weiterer Berücksichtigung von Daten über Rotationsenergien der am jeweiligen Wechselvorgang beteiligen Zahnräder und/oder damit in Verzahnungseingriff befindlichen Zahnradpaarungen erfolgen.

Das erfindungsgemäße Wechselgetriebe kann insbesondere über eine geeignete Einrichtung zur Steuerung aller Wechselvorgänge von Übersetzungsstufen verfügen, welche vorzugsweise die Ausgangssignale mindestens eines der Schaltwalze zugeordneten Sensors berücksichtigen kann, wobei der mindestens eine Sensor zur Erfassung von Drehgeschwindigkeiten und/oder Beschleunigungen der Schaltwalze bei Wechselvorgängen von Übersetzungsstufen vorgesehen ist. solchermaßen - da es sich um einen Direktantrieb handelt - eindeutig die jeweilige Position der Schaltwalze wiedergeben kann. Grundsätzlich kommt als solcher Sensor auch ein Absolutwert-Positionsgeber in Frage, der auf einem berührungslos arbeitenden Encoder basiert, realisiert bspw. durch in der Welle fixierte bzw. eingeklebte Magneten o. dgl.

Grundsätzlich ist zu betonen, dass das erfindungsgemäße Wechselgetriebe mit einem Steuerungsverfahren gemäß einer der zuvor beschriebenen Ausführungsvarianten zur Durchführung von Wechselvorgängen von Übersetzungsstufen betrieben werden kann. Das Getriebe kann insbesondere ein sequentiell schaltendes Getriebe sein.

Es sei an dieser Stelle ausdrücklich erwähnt, dass alle Aspekte und Ausführungsvarianten, die im Zusammenhang mit dem erfindungsgemäßen Wechselgetriebe erläutert wurden, gleichermaßen Teilaspekte des erfindungsgemäßen Verfahrens zu dessen Steuerung betreffen oder bilden können. Wenn daher an einer Stelle bei der Beschreibung oder auch bei den Anspruchsdefinitionen zum erfindungsgemäßen Wechselgetriebe von bestimmten Aspekten und/oder Zusammenhängen und/oder Wirkungen die Rede ist, so gilt dies gleichermaßen für das erfindungsgemäße Verfahren.

In umgekehrter Weise gilt dasselbe, so dass auch alle Aspekte und Ausführungsvarianten, die im Zusammenhang mit dem erfindungsgemäßen Verfahren zur Steuerung erläutert wurden, gleichermaßen Teilaspekte des erfindungsgemäßen Wechselgetriebes betreffen oder sein können, das solchermaßen, d.h. mittels des Verfahrens steuerbar sein kann. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für das erfindungsgemäße Wechselgetriebe.

Wahlweise kann als Antriebsmotor für den Schaltwalzenantrieb ein bürstenloser oder sog. Torquemotor zum Einsatz kommen, der aufgrund seines spezifischen Einsatzzweckes der Gattung der sog. Langsamläufer zuzuordnen ist. Solche bürstenlosen Motoren oder Torquemotoren weisen nicht nur generell eine hohe Leistungsdichte auf, sondern benötigen gegenüber bisher verwendeten Antriebsmotoren eine relativ geringe Versorgungsleistung. Grundsätzlich geeignet als Antriebsmotor für den Schaltwalzenantrieb ist auch ein permanenterregter Synchronmotor, der ebenfalls eine vergleichsweise hohe Leistungsdichte aufweisen kann und zudem mit geringen Versorgungsleistungen auskommt.

Bei einer typischen Stromaufnahme von weniger als einem Ampere derartiger Torquemotoren oder permanenterregten Synchronmotoren lassen sich Gewicht und Bauraum sparen, was im mobilen Einsatz für Fahrzeugantriebe generell von Vorteil ist. Der Antriebsmotor kann wahlweise als Innenläufer oder als Außenläufer ausgebildet sein.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Perspektivansicht einer Lager- und Anordnungskonfiguration einer drehbaren Schaltwalze für ein Wechselgetriebe und eines mit der Schaltwalze gekoppelten elektromotorischen Direktantriebes.
Fig. 2A zeigt eine schematische Draufsicht auf eine Ausführungsvariante einer Schaltmuffe eines Wechselgetriebes.
Fig. 2B zeigt eine schematische Seitenansicht eines Verzahnungseingriffes einer Schaltmuffe gemäß Fig. 2A mit einem Gangrad eines sequentiell schaltenden Wechselgetriebes.
Fig. 3A zeigt in einer Detailansicht eine Kontaktsituation zweier Zähne einer Schaltmuffe bzw. eines Gangrades im beginnenden Verzahnungseingriff.
Fig. 3B zeigt einen idealtypischen Schaltverlauf sowie einen nicht erfolgreichen Einspurvorgang im qualitativen Weg-Zeit-Diagramm.
Fig. 3C zeigt einen idealtypischen Schaltverlauf sowie einen invertierten und einen überschwingenden Einspurvorgang im qualitativen Weg-Zeit-Diagramm.

Für gleiche oder gleich wirkende Elemente der Erfindung werden in der folgenden Figurenbeschreibung jeweils gleiche Bezugszeichen verwendet. Ferner werden der Übersicht halber nur solche Bezugszeichen in den einzelnen Figuren dargestellt, die für die Beschreibung der jeweiligen Figur erforderlich sind. Die dargestellten Ausführungsformen stellen lediglich Beispiele dar, wie die Schaltwalze des erfindungsgemäßen Wechselgetriebes mitsamt ihrem elektrischen Direktantrieb sowie ein Verfahren zur Steuerung des Wechselgetriebes ausgestaltet sein können und stellen keine abschließende Begrenzung dar.

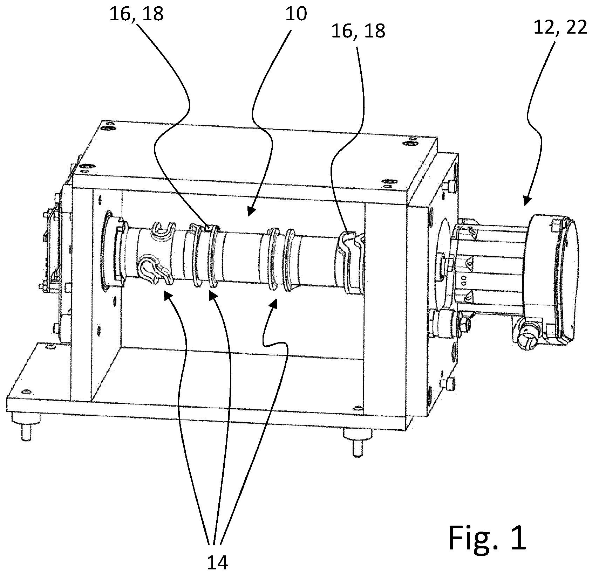

Die schematische Perspektivansicht der Fig. 1 verdeutlicht eine Lager- und Anordnungskonfiguration einer drehbaren Schaltwalze 10 für eine Ausführungsvariante eines hier nicht näher dargestellten Wechselgetriebes. Die drehbar gelagerte Schaltwalze 10 ist mit einem elektromotorischen Direktantrieb 12 gekoppelt, der als Antriebsmotor für die Schaltwalze 10 dient und diese bedarfsweise in beide Drehrichtungen verdrehen kann.

Ein hier nicht dargestellter Teil der vorliegenden Erfindung ist ein drehmoment- und/oder drehzahlwandelndes Wechselgetriebe mit einer Eingangswelle, die bspw. mit einem in vergleichsweise hohem Drehzahlniveau und großem Drehzahlband betreibbaren Verbrennungsmotor gekoppelt ist, und mit einer Ausgangswelle, die bspw. mit einem Achs- oder Radantrieb eines Fahrzeuges gekoppelt ist, der ein deutlich geringeres Drehzahlniveau als der Verbrennungsmotor, aber höhere Drehmomente als dieser benötigt. Gleiches gilt grundsätzlich auch für elektromotorische Fahrzeugantriebe, weil auch bei diesen Antriebsmotoren normalerweise mindestens zwei Übersetzungsstufen sinnvoll sind, die gleichermaßen mittels eines mechanischen Wechselgetriebes zur Drehzahl- und Drehmomentwandlung zur Verfügung gestellt werden können.

Um die Drehzahl- und Drehmomentwandlung zwischen dem Verbrennungs- oder Elektromotor und dem Achs- oder Radantrieb des Fahrzeuges zu ermöglichen, weist das hier nicht dargestellte Wechselgetriebe mindestens zwei Übersetzungsstufen mit wenigstens zwei wechselbaren Zahnradpaarungen auf, wobei die Zahnräder dieser wenigstens zwei wechselbaren Zahnradpaarungen jeweils auf Wellen gelagert sind und/oder auf oder mit diesen in einem Getriebegehäuse oder anderweitig gelagerten Wellen rotieren. Typischerweise sind diesen Zahnrädern jeweils rotierbare und auf den Wellen gelagerte Klauenringe zugeordnet, die in axialer Richtung auf den Wellen verschoben werden können, um unter Verwendung der nachfolgend beschriebenen Schaltelemente je nach gewünschter Übersetzungsstufe unterschiedliche Zahnradpaarungen in einen Verzahnungseingriff bringen zu können.

Da es sich bei dem Wechselgetriebe insbesondere um ein sequentiell schaltendes sog. Dog-Ring-Getriebe oder um eine sog. Dog-Box handelt, sind die Klauenringe als sog. Dog-Ringe ausgebildet, bei denen ein axialer Eingriff mit den korrespondierenden DogRingen über wenige große Zähne erfolgt, die außerdem leicht hinterschnitten sind. Die gleiche Anzahl Zähne finden sich an den Stirnseiten der mit den Klauenringen oder Schiebemuffen in Eingriff bringbaren Gangrädern. Die Schaltmuffen oder Klauenring und die Gangräder können bspw. jeweils vier bis sechs große Zähne aufweisen, wobei über dem stirnseitigen Eingriffsring der Schaltmuffen oder Klauenringe und Gangräder das Verhältnis zwischen Zahn und Freiraum bei etwa 30:70 liegen kann.

Um die gewünschten Verzahnungseingriffe realisieren zu können, umfasst das Wechselgetriebe geeignete Schaltelemente, bspw. in Form von beweglichen Schaltgabeln, Schaltstiften o. dgl. (hier nicht gezeigt), die in aller Regel auf die schon erwähnten, aber hier ebenfalls nicht dargestellten Schiebemuffen wirken, die mit den Klauenringen der Zahnradpaarungen bzw. den Zahnrädern der Zahnradpaarungen in Verbindung stehen und diese wechseln können, womit insbesondere ein axiales Verschieben der den Zahnrädern auf den lagernden Wellen zugeordneten Klauenringen oder Schiebemuffen gemeint sein kann.

Die genannten Schaltelemente, die bspw. durch bewegliche oder verschiebbare oder schwenkbare Schaltgabeln oder Schaltstifte gebildet sein können, sind von der dreh- oder schwenkbaren Schaltwalze 10 geführt und stehen deshalb mit definiert geformten Kulissenführungen 14 in Eingriff und befinden sich auf diese Weise in Wirkverbindung mit der in definierte Winkellagen bringbaren und zwischen diesen Winkellagen verdrehbaren Schaltwalze 10. Die Kulissenführungen 14 sind im gezeigten Ausführungsbeispiel durch am Umfang der als zylindrische Welle definierten Außendurchmessers ausgebildeten Schaltwalze 10 verlaufende Nutführungen 16 gebildet, die über ihren Umfangsverlauf an einigen Stellen Krümmungen 18 und an anderen Stellen Endanschläge (nicht gesondert bezeichnet) aufweisen können.

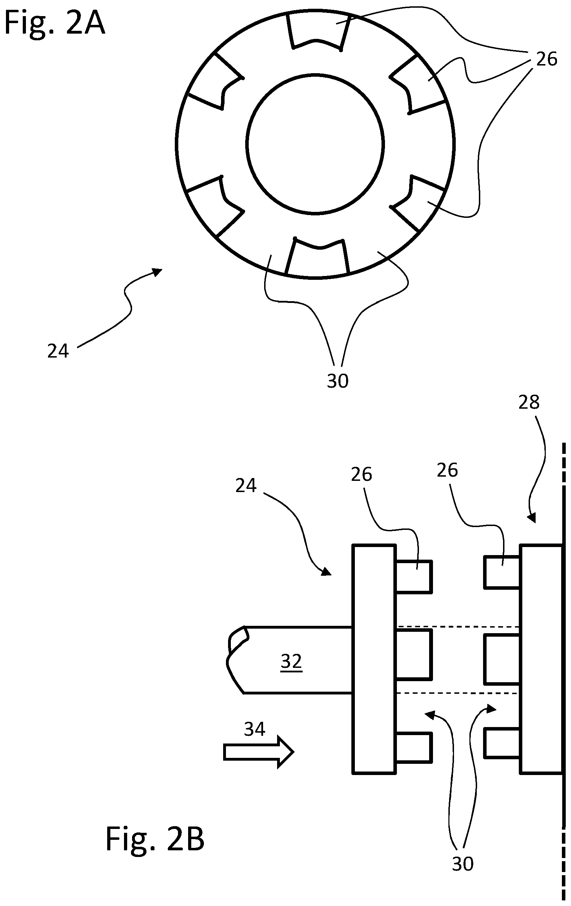

Dass ein solches Herausspringen unter bestimmten Umständen bei solchen Dog-Ring-Getrieben nicht immer verhindert werden kann, wird anhand der folgenden Figuren 2A bis 3C noch detailliert erläutert.

Wie es die Fig. 1 schematisch andeutet, verfügt die verdrehbare Schaltwalze 10 über den gezeigten elektromotorischen Direktantrieb 12, mit dessen Hilfe die Schaltwalze 10 in sehr exakter Weise um definierte Drehwinkel gedreht und solchermaßen in die jeweiligen definierten Winkellagen gebracht werden kann. Wahlweise kann der elektromotorische Direktantrieb 12 der Schaltwalze 10 durch einen bürstenlosen Gleichstrommotor 22 oder durch einen permanenterregten Synchronmotor gebildet sein, der direkt mit der Schaltwalze 10 gekoppelt ist, d.h. ohne Zwischenschaltung eines Getriebes oder einer Umlenkung o. dgl.

Ein solcher durch einen bürstenlosen Gleichstrommotor 22 (oder durch einen permanenterregten Synchronmotor) gebildeter Antriebsmotor 12, der aufgrund seines spezifischen Einsatzzweckes der Gattung der sog. Langsamläufer zuzuordnen ist, kann auch als Torquemotor bezeichnet werden. Solche Torquemotoren weisen bei vergleichsweise geringem Drehzahlniveau relativ hohe Drehmomente auf, wie sie für den vorliegenden Einsatzzweck auch benötigt werden, denn der Antriebsmotor 12 wirkt über die direkte Koppelung mit der Schaltwalze 10 unmittelbar auf die zu bewegenden Schaltelemente, die wiederum mit den ggf. unter Last stehenden Zahnradpaarungen des Wechselgetriebes zusammenwirken und diese auf den Getriebewellen verschieben müssen.

Auch wenn in der Fig. 1 eine Rahmenanordnung zur Lagerung der Schaltwalze 10 und zur Befestigung des direkt mit dieser gekoppelten Antriebsmotors 12 erkennbar ist, so ist diese Rahmenkonstruktion nicht zwingend als konkrete Einbausituation in einem Wechselgetriebe zu verstehen. Allerdings kann eine sinnvolle Ausführungsvariante des erfindungsgemäßen Wechselgetriebes vorsehen, dass der mit der Schaltwalze 10 direkt gekoppelte und in fester Drehverbindung stehende elektromotorische Direktantrieb 12 modular steckbar und/oder schnellwechselbar und/oder werkzeuglos austauschbar ist, was entweder für die leichte Austauschbarkeit gegen unterschiedlich dimensionierte Antriebsmotoren 12 bei verschiedenen Getriebebaugrößen und/oder für die leichte Zugänglichkeit für Wartungszwecke von Vorteil sein kann.

Solche bürstenlosen Gleichstrommotoren 22 oder permanenterregte Synchronmotoren als Drehantriebe für Schaltwalzen 10 von Wechselgetrieben ermöglichen eine hohe Leistungsdichte und damit eine besonders kompakte Bauform, so dass auf jegliche Getriebeübersetzungsstufen zwischen der Schaltwalze 10 und dem Antriebsmotor 12 verzichtet werden kann. Außerdem bietet ein solch kompakter Motor 12 hoher Leistungsdichte vielfältige Vorteile hinsichtlich des Packaging, denn es besteht ein hoher Grad an Variabilität beim Einbau des Antriebsmotors 12, der problemlos innerhalb des Getriebegehäuses untergebracht werden kann, so dass eine Wellendurchführung für den Antrieb der Schaltwalze 10 durch das Getriebegehäuse nach außen entfallen kann.

Wie bereits weiter oben erläutert, handelt es sich bei dem Getriebe, das mit der in Fig. 1 gezeigten Schaltwalze 10 ausgestattet ist, um ein sequentiell schaltendes Getriebe, das als sog. Dog-Box (nicht gezeigt) ausgebildet ist, das u.a. dadurch charakterisiert ist, dass es sich mit vergleichsweise kurzen Schaltzeiten und ohne die von herkömmlichen Wechselgetrieben bekannte weiche Synchronisation schalten lässt.

Eine in Fig. 2A in schematischer Draufsicht gezeigte Schaltmuffe 24, wie sie in solchen Dog-Ring-Getrieben oder Dog-Boxen eingesetzt werden kann, weist nicht die übliche größere Anzahl kleiner Eingriffszähne zum axialen Eingriff mit den zu schaltenden Gangrädern auf, sondern nur wenige große Zähne 26, die zudem vorzugsweise leicht hinterschnitten sind, was jedoch in der schematischen Ansicht der Fig. 2A nicht verdeutlicht ist.

Die gleiche Anzahl Zähne 26 findet sich an den Stirnseiten der mit den Schiebemuffen 24 in Eingriff bringbaren Gangrädern 28 (vgl. die schematische Ansicht der Fig. 2B). Die Schaltmuffen oder Schiebemuffen 24 und Gangräder 28 können bspw. jeweils vier bis sechs große Zähne 26 aufweisen, wobei über dem stirnseitigen Eingriffsring der Schalt- oder Schiebemuffen 24 und Gangräder 28 das Verhältnis zwischen Zahn 26 und Freiraum 30 bei etwa 30:70 liegen kann, was insbesondere der Reduzierung des Risikos dienen soll, dass beim Schaltvorgang, bei dem die durch eine Schaltgabel (nicht gezeigt) betätigte Schalt- oder Schiebemuffe 24 auf der Getriebewelle 32 in axialer Richtung 34 gegen die Stirnseite des Gangrades 28 verschoben wird, ein Zahn 26 der Schaltmuffe oder Schiebemuffe 24 auf einen Zahn 26 des Gangrades 28 trifft, wie dies aus der schematischen Seitenansicht der Fig. 2B entnommen werden kann.

In der Schaltpraxis zeigt sich, dass für reibungslose Schaltabläufe, bei denen die Zähne 26 problemlos ineinandergreifen, zahlreiche Steuerungsmaßnahmen sinnvoll und notwendig sind, wie sie Gegenstand der vorliegenden Erfindung sind. So stellt es eine grundsätzlich sinnvolle Maßnahme dar, beim Aktivieren oder Deaktivieren einer Übersetzungsstufe und/oder beim Wechseln von Übersetzungsstufen des Wechselgetriebes jeweils zumindest die Rotationsenergien der betroffenen Zahnräder und/oder damit in Verzahnungseingriff befindlichen Zahnradpaarungen zu berücksichtigen. Das gilt etwa beim Aufheben eines Eingriffs der Schiebemuffe 24 mit einem Zahnrad 28 der Zahnradpaarung einer ersten Übersetzungsstufe, bei dem die mindestens eine Schiebemuffe 24 axial verschoben und aus dem Eingriff mit dem Zahnrad der Zahnradpaarung der ersten Übersetzungsstufe gebracht wird (hier nicht gezeigt).

Dies gilt ebenso beim Herstellen eines Eingriffes der Schiebemuffe 24 mit einem Zahnrad 28 der Zahnradpaarung einer zweiten Übersetzungsstufe, bei dem die Schiebemuffe 24 ebenso axial (in Richtung 34, vgl. Fig. 2B) verschoben und in den Eingriff mit dem Zahnrad 28 der Zahnradpaarung der zweiten Übersetzungsstufe gebracht wird. Bei diesen genannten Verschiebe-, Schalt- und Gangwechselvorgängen werden jeweils die Drehungen der Schaltwalze 10 (vgl. Fig. 1) auf die jeweiligen Drehzahlen der mit den Schiebemuffen 24 aus dem Eingriff oder in Eingriff zu bringenden Zahnräder 28 abgestimmt, wobei gleichzeitig zumindest die Rotationsenergien der betroffenen Zahnräder 28 und/oder damit in Verzahnungseingriff befindlichen Zahnradpaarungen berücksichtigt werden.

Die Durchführung solcher Schaltabläufe, wie sie hier beschrieben werden, erfordern den Einsatz elektronischer Schaltprogramme für die Drehungen der Schaltwalze 10 und der damit ausgelösten Betätigungsschritte der Schaltgabeln oder Schaltelemente, die mit den Schiebe- oder Schaltmuffen 24 zusammenwirken, wobei diese elektronischen Schaltprogramme in der Lage sind, die unterschiedlichsten Randbedingungen und Konditionen zu berücksichtigen und/oder auf unterschiedliche Kennfelder zurückzugreifen, die für störungsfreie und schnelle Schaltvorgänge notwendig sind.

Eine dieser Kernfunktionen besteht in der Vermeidung von möglicherweise auftretenden Über- und/oder Unterschwingvorgängen einer Ist-Position während des Einregelns einer Zielposition, die einem Zielgang entspricht, so weit wie möglich zu reduzieren, da diese Zustände die Gefahr mit sich bringen, dass der jeweilige Zielgang wieder ausgerückt wird, was mit einer Beschädigung der Mechanik, insbesondere der betroffenen Schaltmuffe und/oder des damit in Eingriff stehenden oder betroffenen Dog-Rings einhergehen kann. Des Weiteren ist ein verfrühtes Abbremsen der Zahnradpaarung der Zielübersetzung, abhängig von der Regeldifferenz der Positionen, ebenfalls nicht sinnvoll, da dies gleichermaßen zu einer Beschädigung während des Einrückens des Ganges führen kann und zudem auch noch einen deutlichen Verlust in der Schaltperformance mit sich bringen kann.

Wie oben bereits erläutert und wie durch die Figuren 2A und 2B in schematischer Weise verdeutlicht, weisen die Dog-Ringe oder Schaltmuffen 24 von sequentiellen Getrieben eine vergleichsweise geringe Anzahl von Zähnen 26 auf, die zudem meist Hinterschneidungen aufweisen, so dass ein vergleichsweise harter Eingriff zwischen den korrespondierenden Verzahnungen der Schaltmuffen 24 und der daran angrenzenden stirnseitigen Dog-Ringe der Zahnräder 28 der verschiedenen Übersetzungsstufen erfolgt und für einen erfolgreichen Schaltvorgang auch erfolgen muss.

Während eines Einrückvorganges für die Schiebemuffe 24 in ein Zahnrad 28 einer zu aktivierenden zweiten Übersetzungsstufe muss nach einer formschlüssigen Passung gesucht werden, indem ein Drehmoment- und/oder Drehzahlverlauf des elektromotorischen Direktantriebes 12 der Schaltwalze 10 und/oder die Drehzahlverläufe der rotierenden Getriebeteile wie etwa der Getriebewelle 32 erfasst werden und daraus erkannt wird, ob die Schiebemuffe 24 den Eingriff mit dem Zahnrad 28 der zu aktivierenden zweiten Übersetzungsstufe herstellen konnte. Hierbei wird beim Bewegen eines Dog-Rings bzw. einer Schiebemuffe 24 in Richtung zu einem Zahnrad 28 eines Zielganges versucht, die jeweils passende "Lücke" zu treffen, um die Dog-Ringe ineinandergreifen zu lassen. Gleichzeitig kann durch Erfassung des Drehzahlverlaufs und der Stromaufnahme im Antriebsmotor 12 für die Schaltwalze 10 erkannt werden, ob der Dog "greift" und einspurt oder "zurückspringt", was als Impuls über die Schaltgabel übertragen und in die Schaltwalze 10 eingeleitet wird.

Im Verlaufe jedes Schaltvorganges besteht grundsätzlich eine gegebene Wahrscheinlichkeit, einen sog. Dog oder Zahn 26 des Zielganges zu treffen. Die mit den Dogs oder Zähnen 26 der Schaltmuffe 24 korrespondierenden Dogs oder Zähne 26 des Zielganges sind an dem Zahnkranz 28 des Zielganges montiert und sind somit Teil der rotierenden Komponenten des Getriebes. An einem Getriebegang sind mehrere Dogs oder Zähne 26 in einem Winkelabstand befestigt. Der Abstand zwischen zwei Dogs oder Zähnen 26, welche einen gemeinsamen Winkel aufspannen, wird Dogfenster genannt, was in Fig. 2A und in Fig. 2B als Freiraum 30 zwischen benachbarten Zähnen 26 verdeutlicht ist. Der an der Schaltmuffe 24 befindliche Dog oder Zahn 26, welcher mit der Schaltgabel in den Zielgang bewegt wird, ist mechanisch von den Dogringen oder Gangrädern 28 der Gänge getrennt und muss, um einen Gang einzulegen, in ein Dogfenster oder Freiraum 30 des Zielganges transportiert werden.

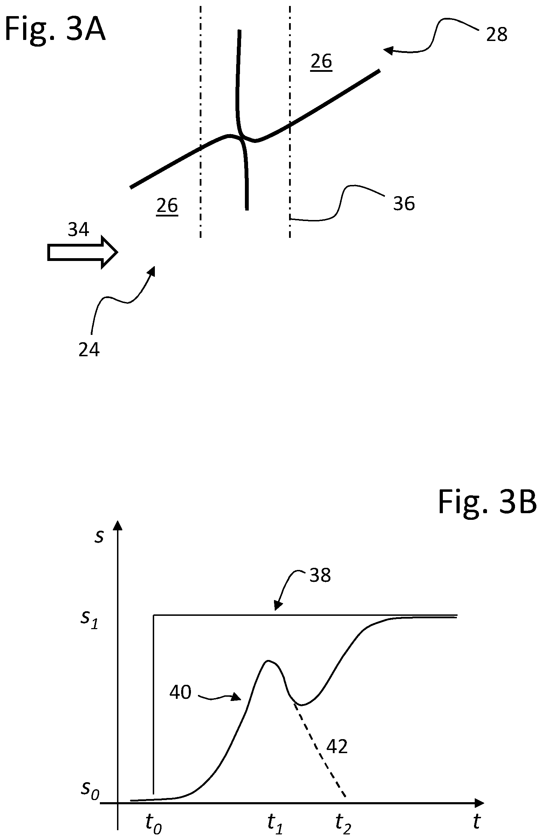

Trifft gemäß Fig. 3A bei der axialen Verschiebung 34 der Dog oder Zahn 26 der Schaltmuffe 24 auf einen Dog oder Zahn 26 des Gangrades 28 des Zielganges während der Einspurphase, d.h. innerhalb eines axial abgegrenzten Kontaktbereiches 36 oder des sog. Dogfensters 36, so wird hierbei ein Impuls umgesetzt, welcher dazu führt, dass Energie in die Schaltgabel übertragen wird. Je nach Energieeintrag kann es dazu kommen, dass der translatorische Vektor der Schaltgabel invertiert wird und der Zielgang wieder Richtung Initialgang ausgerückt wird. Dieser Vorgang wird im vorliegenden Zusammenhang auch als Dog-to-Dog-Ereignis bezeichnet.

Es hat sich erwiesen, dass diese als Dog-to-Dog-Ereignisse bezeichneten fehlerhaften Einspurvorgänge bei jeglichen Schaltvorgängen relativ häufig auftreten können. Da diese Ereignisse jeweils zu ausgeprägten Unstetigkeiten in den Regelabläufen führen, ist es sinnvoll, solche Dog-to-Dog-Ereignisse zu detektieren, um sinnvolle Gegenmaßnahmen einleiten zu können.

Hierfür sieht das erfindungsgemäße Verfahren einen spezifischen Algorithmus vor, welcher anhand der Drehzahl und Bewegungsrichtung des Stellers bzw. von der Schaltwalze 10 betätigten Schaltelementes oder der von der Schaltwalze 10 bewegten Schaltgabel ein solches Dog-to-Dog-Ereignis erkennt. Diese Erkennung kann ggf. indirekt über die Analyse der Stromaufnahme und des Drehzahlverlauf beim Antrieb 12 der Schaltwalze 10 erfolgen, da die spezifischen Eigenschaften solcher Dog-to-Dog-Ereignisse recht genau ermittelbar und damit auch im normalen Schaltablauf erkennbar sind.

Insbesondere kann bei der Erkennung eines Dog-to-Dog-Ereignisses überprüft werden, ob in einem gewissen Winkelfenster des Stellers bzw. der Schaltwalze 10 die Drehrichtung während der Bewegung invertiert wird oder der Gradient der Drehzahl eine deutliche Unstetigkeit aufweist. Ist dies der Fall sendet der Algorithmus eine Information an alle anderen Komponenten der Software.

Die Fig. 3B verdeutlicht anhand eines schematischen und qualitativ zu verstehenden Diagrammes einen idealtypischen Schaltablauf 38 über der Schaltzeit t, bei dem der Schaltweg s bereits zu einem Schaltzeitpunkt t₀ auf einen Schaltweg s₁ springt, der einer eingerückten Übersetzungsstufe mit vollständig im Eingriff befindlichen Zähnen 26 von Schiebemuffe 24 und Gangrad 28 (vgl. Fig. 2B) entspricht.

Da ein solcher idealtypischer Schaltablauf 38 in der Praxis jedoch nicht zu realisieren ist, muss nach dem durchaus wahrscheinlichen Auftreten eines Dog-to-Dog-Ereignisses, das einem nicht erfolgreichen Einrückvorgang und/oder dem erfolglosen Versuch der Herstellung eines Eingriffes zwischen Schiebemuffe 24 und Zahnrad 28 der zu aktivierenden zweiten Übersetzungsstufe entsprechen kann, der Einrückvorgang durch entsprechende Rückdrehung und nochmalige Drehung der Schaltwalze 10 mit entsprechend geführter Schaltgabel mindestens einmal, ggf. mehrfach wiederholt werden.

Ein solcher möglicher realer Schaltablauf 40 ist in Fig. 3B durch die durchgezogene Kurve beispielhaft verdeutlicht, die einen ersten Absatz 42 bei einem Zeitpunkt t₁ mit Umkehrung der Bewegungsrichtung des Schaltweges s aufweist, die eine Invertierung 42 des translatorischen Vektors der Schaltgabel und damit einhergehender Ausrückung des Dogs vom Zielgang weg wieder Richtung Initialgang verdeutlicht. Wenn dieser Invertierung 42 nicht durch eine erneute positive Drehbewegung der Schaltwalze 10 mit entsprechender Bewegung der Schaltgabel und damit einhergehender erneuter Verschiebung 34 der Schaltmuffe 24 in Richtung zum Gangrad 28 entgegengewirkt wird, was einer Teilwiederholung der Abläufe des Schaltvorganges entspricht, so nimmt die Kurve den unterbrochenen Verlauf nach unten in Richtung s₀, was einem gescheiterten Einspurvorgang zum Zeitpunkt t₂ mit nicht in sauberen Eingriff geratenden Zähnen 26 der Schaltmuffe 24 entspricht, was einer sog. Dog-to-Dog-Situation mit einem ausgeprägten Rückschlag oder einem Abprall der Schaltmuffen entsprechen kann.

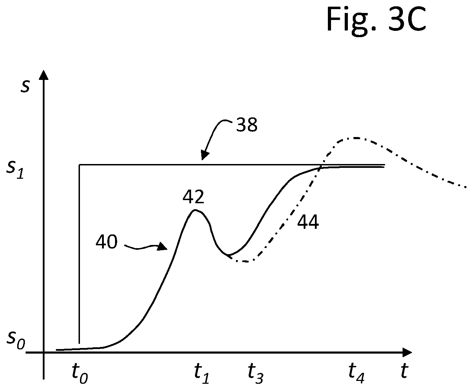

Ein weiterer möglicher realer Schaltablauf 40 ist in Fig. 3C durch die durchgezogene Kurve beispielhaft verdeutlicht, die nach dem ersten Absatz 42 bei einem Zeitpunkt t₁ die in Fig. 3B gezeigte Umkehrung der Bewegungsrichtung des Schaltweges s aufweist, was eine Invertierung 42 des translatorischen Vektors der Schaltgabel und damit einhergehender Ausrückung des Dogs vom Zielgang weg wieder Richtung Initialgang bedeutet. Allerdings wird dieser Invertierung 42 zum Zeitpunkt t₃ durch eine erneute positive Drehbewegung der Schaltwalze 10 mit entsprechender Bewegung der Schaltgabel und damit einhergehender erneuter Verschiebung 34 der Schaltmuffe 24 in Richtung zum Gangrad 28 entgegengewirkt, jedoch mit stärkerem Impuls als sinnvoll, was einen Überschwinger 44 produziert, der als strichpunktierter Verlauf in Fig. 3C verdeutlicht ist. Sofern der Schaltweg nicht durch den Anschlag bei s1 begrenzt wäre, würde die axiale Verschiebung der Schaltmuffe 24 über diesen Anschlag s1 hinausreichen und ggf. in der gezeigten Weise bei einem Zeitpunkt t₄ zurückschwingen.

Wie die Figuren 3B und 3C verdeutlichen, lassen sich die immer wieder auftretenden Dog-to-Dog-Ereignisse und die damit einhergehenden fehlerhaften Einrückvorgänge oder Einrückversuche zumindest auf Grundlage der Erfassung der Drehzahlen des Zahnrades oder der Zahnräder der zweiten Übersetzungsstufe und/oder auf Grundlage der Erfassung der Drehgeschwindigkeit und/oder des Drehwinkels der Schaltwelle 10 und/oder des für die Drehung der Schaltwelle 10 aufzubringenden Antriebsmoments des elektromotorischen Direktantriebes 12 erfasst und/oder erkannt werden. Hierbei ist der Zeitraum zwischen dem Beginn des Schaltvorganges bei t₀ und dem Ende des anzustrebenden erfolgreichen Einrückvorganges zwischen t₃ und t₄ relevant (vgl. Fig. 3B und Fig. 3C).

Es wird dabei überprüft, ob sich in einem gewissen Winkelfenster des Stellers bzw. der Schaltwelle 10, das in diesen Zeitraum fällt, die Drehrichtung während der Bewegung invertiert, oder ob der Gradient der Drehzahl eine deutliche Unstetigkeit aufweist. Ist dies der Fall, so sendet der Algorithmus eine Information an alle anderen Komponenten der Software, dass ein Schaltvorgang sinnvollerweise neu zu starten und zu wiederholen ist.

Grundsätzlich ist es gemäß Fig. 3C sinnvoll, schon bei Erkennung eines Dog-to-Dog-Ereignisses den Stellvorgang frühzeitig zu unterbrechen und die zuvor invertierte "Rück"-Stellbewegung der Schaltgabel wieder möglichst schnell umzukehren, um einen erneuten Schaltvorgang zu versuchen. Auf diese Weise kann ein Teil der aufgewendeten Stellenergie, welche durch den Impuls übertragen wurde, umgewandelt werden, um den Bewegungs-Vektor der Schaltgabel und der von dieser bewegten Schiebemuffe 24 wieder in Richtung Zielgang zu lenken. Diese Erkennungsschritte wiederholen sich ggf. mehrfach, wobei nicht immer identische Wiederholungsprozesse aufeinanderfolgen müssen, denn die Schaltvorgänge können zu unterschiedlichen Zeitpunkten abgebrochen worden sein. Allerdings werden wieder im Wesentlichen dieselben Maßnahmen wiederholt getroffen, wenn der Zielgang erneut eingerückt werden soll.

Generell ist es bei den beschriebenen Verfahrensvarianten sinnvoll, im Zusammenhang mit einzelnen, mit ausgewählten oder mit allen durchgeführten Wechselvorgängen von Übersetzungsstufen jeweils eine Stromaufnahme des elektromotorischen Direktantriebes 12 der Schaltwalze 10 zu erfassen und auszuwerten. Da es in technischer Hinsicht generell möglich und sinnvoll ist, bei allen Gangwechselvorgängen die Stromaufnahme des Antriebsmotors 12 für die Schaltwalze 10 zu erfassen, kann diese Überwachung vorteilhaft genutzt werden, um eine mechanische Überlastung anhand einer Überschreitung eines Grenzwertes für die Stromaufnahme zu erkennen. Damit ist eine Funktion beim erfindungsgemäßen Verfahren und bei der Getriebesteuerung geschaffen, um zumindest die elektronischen Bauteile sowie die elektrischen Komponenten vor einer Überbelastung durch zu hohe elektrische Ströme zu schützen.

Alle oben erläuterten Ereignisse, Ungereimtheiten im Schaltablauf oder alle auftretenden Fehler können zudem protokolliert werden, da jedem Fehlerfall eine definierte Identifikationsnummer zugewiesen kann, so dass somit unzweifelhaft und eindeutig dem Nutzer oder einem Auswertesystem mitgeteilt werden kann, zu welchem Zeitpunkt welcher Fehler oder welches Ereignis aufgetreten ist.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Schaltwalze
- 12: Direktantrieb, elektromotorischer Direktantrieb
- 14: Kulissenführung
- 16: Nutführung
- 18: Krümmung
- 22: Antriebsmotor, Gleichstrommotor, bürstenloser Gleichstrommotor
- 24: Schaltmuffe
- 26: Zahn, Klaue
- 28: Zahnrad, Gangrad
- 30: Freiraum (zwischen benachbarten Zähnen oder Klauen)
- 32: Getriebewelle
- 34: axiale Verschieberichtung
- 36: Kontaktbereich, Dogfenster
- 38: idealtypischer Schaltablauf
- 40: realer Schaltablauf
- 42: Invertierung
- 44: Überschwinger

## Patentansprüche

1. Verfahren zur Steuerung eines drehmoment- und/oder drehzahlwandelnden Wechselgetriebes, das über eine Eingangswelle und eine Ausgangswelle sowie mindestens zwei Übersetzungsstufen verfügt, denen jeweils wenigstens eine wechselbare Zahnradpaarung zugeordnet ist,
- wobei Schaltelemente auf Schiebemuffen wirken, die mit den Zahnradpaarungen bzw. den Zahnrädern der Zahnradpaarungen in Verbindung stehen und diese wechseln können,
- wobei die Schaltelemente in Eingriff mit einer in definierte Winkellagen bringbaren und zwischen diesen Winkellagen verdrehbaren Schaltwalze (10) stehen,
- wobei die Schaltwalze (10) mit einem elektromotorischen Direktantrieb (12) gekoppelt ist, der die Schaltwalze (10) zum Wechseln von Übersetzungsstufen dreht und in die jeweiligen definierten Winkellagen bringt,
- und wobei beim Aktivieren oder Deaktivieren einer Übersetzungsstufe und beim Wechseln von Übersetzungsstufen des Wechselgetriebes die Drehungen der Schaltwalze (10) auf die jeweiligen Drehzahlen der mit den Schiebemuffen (24) aus dem Eingriff oder in Eingriff zu bringenden Zahnräder (28) abgestimmt werden,
- wobei gleichzeitig jeweils zumindest die Rotationsenergien der betroffenen Zahnräder (28) und/oder damit in Verzahnungseingriff befindlichen Zahnradpaarungen berücksichtigt werden.

2. Verfahren nach Anspruch 1, bei dem die Rotationsenergien der mit den jeweiligen Zahnrädern (28), die an einem Wechseln einer jeweiligen Übersetzungsstufe beteiligt sind, in Eingriff befindlichen rotierenden Teile berücksichtigt werden.

3. Verfahren nach Anspruch 1 oder 2, bei dem die Rotationsenergien für unterschiedliche Übersetzungsstufen jeweils unterschiedlich gewichtet und/oder aus Tabellen oder Kennfeldern entnommen und jeweils unterschiedlich berücksichtigt werden.

4. Verfahren nach einem der Ansprüche 1 bis 3, bei dem die Rotationsenergien der Schaltwalze (10) und/oder des die Schaltwalze (10) antreibenden elektromotorischen Direktantriebes (12) ergänzend oder separat berücksichtigt werden.

5. Verfahren nach einem der Ansprüche 1 bis 4, bei dem der elektromotorische Direktantrieb (12) der Schaltwalze (10) mit einer Antriebssteuerung eines Antriebsmotors elektronisch gekoppelt ist, wobei während und/oder in Vorbereitung eines Ausrückvorganges einer Schiebemuffe (24) von einem Zahnrad (28) einer zu deaktivierenden ersten Übersetzungsstufe ein Antriebsmoment des Antriebsmotors reduziert wird.

6. Verfahren nach Anspruch 5, bei dem während des Ausrückvorganges die mit der Schiebemuffe (24) in Wirkeingriff befindliche Schaltgabel mit definierter und/oder veränderlicher Vorspannkraft vorgespannt wird, wobei die Vorspannkraft geringer ist als eine Schaltkraft, die erst bei lastfreiem Antriebsstrang auf die Schaltgabel ausgeübt wird.

7. Verfahren nach Anspruch 5 oder 6, bei dem der Ausrückvorgang nach einer Schaltanforderung mit definierter Verzögerung und in Abstimmung auf das Verhalten des zuvor in seinem Antriebsmoment reduzierten Antriebsmotors erfolgt.

8. Verfahren nach einem der Ansprüche 1 bis 7, bei dem zur Vorbereitung oder während eines Einrückvorganges die zuvor aus dem Eingriff des Zahnrades der deaktivierten ersten Übersetzungsstufe gebrachte Schiebemuffe (24) bei ihrer Annäherung an ein benachbartes Zahnrad (28) einer zu aktivierenden zweiten Übersetzungsstufe nach einer formschlüssigen Passung gesucht wird, indem ein Drehmoment- und/oder Drehzahlverlauf des elektromotorischen Direktantriebes (12) der Schaltwalze (10) erfasst und daraus erkannt wird, ob die Schiebemuffe (24) den Eingriff mit dem Zahnrad (28) der zu aktivierenden zweiten Übersetzungsstufe hergestellt hat.

9. Verfahren nach Anspruch 8, bei dem nach einem nicht erfolgreichen Einrückvorgang und/oder nach einem erfolglosem Versuch der Herstellung eines Eingriffes zwischen Schiebemuffe (24) und Zahnrad (28) der zu aktivierenden zweiten Übersetzungsstufe der Einrückvorgang durch nochmalige Drehung der Schaltwalze (10) mit entsprechend geführter Schaltgabel mindestens einmal oder mehrfach wiederholt wird.

10. Verfahren nach Anspruch 8 oder 9, bei dem ein nicht erfolgreicher Einrückvorgang und/oder ein erfolgloser Versuch der Herstellung eines Eingriffes zwischen Schiebemuffe (24) und Zahnrad (28) der zu aktivierenden zweiten Übersetzungsstufe zumindest auf Grundlage der Erfassung der Drehzahlen des Zahnrades (28) oder der Zahnräder (28) der zweiten Übersetzungsstufe und/oder der Erfassung der Drehgeschwindigkeit und/oder des Drehwinkels der Schaltwelle (10) und/oder des für die Drehung der Schaltwelle (10) aufzubringenden Antriebsmoments des elektromotorischen Direktantriebes (12) erfasst und/oder erkannt wird.

11. Verfahren nach einem der Ansprüche 8 bis 10, bei dem im Zusammenhang mit einem nicht vollständigen Einrückvorgang und damit einhergehender Verklemmung und/oder Verhakung der Schiebemuffe (24) mit dem Zahnrad (28) der zweiten Übersetzungsstufe zumindest die Bewegungsgeschwindigkeit und der Bewegungsverlauf der Schaltgabel und/oder der diese ansteuernde Schaltwalze (10) erfasst und analysiert werden.

12. Verfahren nach Anspruch 11, bei dem im Zusammenhang mit einem nicht vollständigen Einrückvorgang und damit einhergehender Verklemmung und/oder Verhakung der Schiebemuffe (24) mit dem Zahnrad (28) der zweiten Übersetzungsstufe eine Stellkraft und/oder eine Verdrehgeschwindigkeit der Schaltwalze (10) einfach oder mehrfach reduziert und/oder oszillierend variiert wird.

13. Verfahren nach Anspruch 11 oder 12, bei dem im Zusammenhang mit einem nicht vollständigen Einrückvorgang und damit einhergehender Verklemmung und/oder Verhakung der Schiebemuffe (24) mit dem Zahnrad (28) der zweiten Übersetzungsstufe eine Verdrehgeschwindigkeit der Schaltwalze (10) einfach oder mehrfach reduziert und/oder invertiert wird.

14. Verfahren nach einem der Ansprüche 8 bis 13, bei dem im Zusammenhang mit einem nahezu vollständigen oder vollständigen Einrückvorgang und damit einhergehender Passung der Schiebemuffe (24) mit dem Zahnrad (28) der zweiten Übersetzungsstufe und nach einer Zurückbewegung der Schiebemuffe (24) aus der Passung mit dem Zahnrad (28) der zweiten Übersetzungsstufe in das Zahnrad der ausgerückten ersten Übersetzungsstufe zumindest die Bewegungsgeschwindigkeit und der Bewegungsverlauf der Schaltgabel und/oder der diese ansteuernde Schaltwalze (10) erfasst und analysiert werden.

15. Verfahren nach einem der Ansprüche 8 bis 13, bei dem im Zusammenhang mit einem nicht vollständigen Einrückvorgang und damit einhergehender Verklemmung und/oder Verhakung der Schiebemuffe (24) mit dem Zahnrad (28) der zweiten Übersetzungsstufe und nach einer Zurückbewegung der Schiebemuffe (24) aus der Passung mit dem Zahnrad (28) der zweiten Übersetzungsstufe in das Zahnrad der ausgerückten ersten Übersetzungsstufe zumindest die Bewegungsgeschwindigkeit und der Bewegungsverlauf der Schaltgabel und/oder der diese ansteuernde Schaltwalze (10) erfasst und analysiert werden.

16. Verfahren nach einem der Ansprüche 8 bis 15, bei dem im Zusammenhang mit einem nicht vollständigen Einrückvorgang und damit einhergehender Verklemmung und/oder Verhakung der Schiebemuffe (24) mit dem Zahnrad (28) der zweiten Übersetzungsstufe und nach einer Zurückbewegung der Schiebemuffe (24) aus der Passung mit dem Zahnrad (28) der zweiten Übersetzungsstufe ohne Herstellung eines Eingriffes mit dem Zahnrad der ausgerückten ersten Übersetzungsstufe zumindest die Bewegungsgeschwindigkeit und der Bewegungsverlauf der Schaltgabel und/oder der diese ansteuernde Schaltwalze (10) erfasst und analysiert werden.

17. Verfahren nach einem der Ansprüche 8 bis 15, bei dem im Zusammenhang mit einem nahezu vollständigen oder vollständigen Einrückvorgang und damit einhergehender Passung der Schiebemuffe (24) mit dem Zahnrad (28) der zweiten Übersetzungsstufe und nach einer Zurückbewegung der Schiebemuffe (24) aus der Passung mit dem Zahnrad (28) der zweiten Übersetzungsstufe ohne Herstellung eines Eingriffes mit dem Zahnrad der ausgerückten ersten Übersetzungsstufe zumindest die Bewegungsgeschwindigkeit und der Bewegungsverlauf der Schaltgabel und/oder der diese ansteuernde Schaltwalze (10) erfasst und analysiert werden.

18. Verfahren nach Anspruch 16 oder 17, bei dem nach erkannter Zurückbewegung der Schiebemuffe (24) aus der Passung mit dem Zahnrad (28) der zweiten Übersetzungsstufe ein verstärkter und/oder verlängerter und/oder zumindest teilweise oder abschnittsweise wiederholter Schaltimpuls für die Bewegung der Schaltgabel vom elektromotorischen Direktantrieb (12) für die Schaltwalze (10) initiiert wird.

19. Verfahren nach einem der Ansprüche 8 bis 18, bei dem durch Erfassung und Auswertung der in den Zahnradpaarungen und/oder in der Schaltwalze (10) gespeicherten Rotationsenergien eine unterhalb einer definierten Mindestschaltgeschwindigkeit liegende Verschiebegeschwindigkeit der Schiebemuffe (24) erkannt und eine Umdrehungsgeschwindigkeit der Zahnradpaarung der in Eingriff zu bringenden zweiten Übersetzungsstufe erhöht wird.

20. Verfahren nach einem der Ansprüche 1 bis 19, bei dem im Zusammenhang mit Wechselvorgängen von Übersetzungsstufen jeweils eine Stromaufnahme des elektromotorischen Direktantriebes (12) der Schaltwalze (10) erfasst und ausgewertet wird.

21. Verfahren nach Anspruch 20, bei dem während der Erfassung der Stromaufnahme des elektromotorischen Direktantriebes (12) der Schaltwalze (10) das Über- oder Unterschreiten eines definierten Schwellwertes überwacht wird, wobei nach Überschreitung des Schwellwertes ein Stromintegral errechnet wird, das bei einer nachfolgenden Unterschreitung des Schwellwertes wieder auf einen Wert von Null gesetzt wird.

22. Verfahren nach Anspruch 21, bei dem das Stromintegral fortlaufend berechnet wird, wobei nach Überschreiten eines Grenzwertes zumindest die Antriebssteuerung der Schaltwalze (10) unterbrochen und damit weitere Schaltvorgänge unterdrückt werden.

23. Verfahren nach Anspruch 21 oder 22, bei dem nach Ablauf eines definierten Zeitintervalls die Antriebssteuerung der Schaltwalze (10) erneut aktiviert wird.

24. Drehmoment- und/oder drehzahlwandelndes Wechselgetriebe, das über eine Eingangswelle und eine Ausgangswelle sowie mindestens zwei Übersetzungsstufen verfügt, denen jeweils wenigstens eine wechselbare Zahnradpaarung zugeordnet ist,
- wobei Schaltelemente auf Schiebemuffen (24) wirken, die mit den Zahnradpaarungen bzw. den Zahnrädern der Zahnradpaarungen in Verbindung stehen und diese wechseln können im Zusammenhang mit Wechselvorgängen von Übersetzungsstufen,
- wobei die Schaltelemente in Eingriff mit einer in definierte Winkellagen bringbaren und zwischen diesen Winkellagen verdrehbaren Schaltwalze (10) stehen,
- wobei die Schaltwalze (10) mit einem elektromotorischen Direktantrieb (12) gekoppelt ist, der ausgestaltet ist die Schaltwalze (10) zum Wechseln von Übersetzungsstufen zu drehen und in die jeweiligen definierten Winkellagen zu bringen,
- und wobei dem elektromotorischen Direktantrieb (12) der Schaltwalze (10) mindestens eine Einrichtung und/oder ein Sensor zur Erfassung der elektrischen Versorgungsströme bei Betätigungen der Schaltwalze (10) im Zusammenhang mit Wechselvorgängen von Übersetzungsstufen zugeordnet ist,
**dadurch gekennzeichnet, dass**
- das Wechselgetriebe so ausgestaltet ist, dass die Steuerung der Wechselvorgänge von Übersetzungsstufen zumindest auf Grundlage der erfassten Versorgungsströme des elektromotorischen Direktantriebes (12) der Schaltwalze (10) unter weiterer Berücksichtigung von Daten über Rotationsenergien der am jeweiligen Wechselvorgang beteiligen Zahnräder und/oder damit in Verzahnungseingriff befindlichen Zahnradpaarungen erfolgt.

25. Wechselgetriebe nach Anspruch 24, wobei das Wechselgetriebe ferner so ausgestaltet ist, dass dessen Steuerung der Wechselvorgänge von Übersetzungsstufen die Ausgangssignale mindestens eines Sensors berücksichtigen kann, welcher der Schaltwalze (10) zugeordnet ist, wobei der mindestens eine Sensor zur Erfassung von Drehgeschwindigkeiten und/oder Beschleunigungen der Schaltwalze (10) bei Wechselvorgängen von Übersetzungsstufen vorgesehen ist.

## Claims

1. A method used to control a torque-converting and/or speed-converting variable-speed transmission, which has an input shaft and an output shaft and at least two gear ratios, each of which is assigned at least one changeable gear pair,
- wherein shifting elements act on sliding sleeves that are connected to the gear pairs or to the gearwheels of the gear pairs and are able to change these,
- wherein the shifting elements are in engagement with a shift drum (10), which is bringable into defined angular positions and rotatable between these angular positions,
- wherein the shift drum (10) is coupled with an electric-motor direct drive (12), which rotates the shift drum (10) and brings it into the particular defined angular positions in order to change gear ratios,
- and wherein, upon activating or deactivating a gear ratio and upon changing gear ratios of the variable-speed transmission, the rotations of the shift drum (10) are coordinated with the particular rotational speeds of the gearwheels (28) to be brought out of or into engagement with the sliding sleeves (24),
- wherein in each case at least the rotational energies of the gearwheels (28) in question and/or of gear pairs in meshing engagement therewith are taken into account at the same time.

2. The method according to claim 1, in which the rotational energies of the rotating parts in engagement with the particular gearwheels (28) involved in a change of a particular gear ratio are taken into account.

3. The method according to claim 1 or 2, in which the rotational energies for different gear ratios are each weighted differently and/or are taken from tables or characteristic maps and each taken into account differently.

4. The method according to one of the claims 1 to 3, in which the rotational energies of the shift drum (10) and/or of the electric-motor direct drive (12) driving the shift drum (10) are taken into account complementarily or separately.

5. The method according to one of the claims 1 to 4, in which the electric-motor direct drive (12) of the shift drum (10) is electronically coupled with a drive control of a drive motor, wherein a drive torque of the drive motor is reduced during and/or in preparation of a disengaging operation of a sliding sleeve (24) from a gearwheel (28) of a first gear ratio to be deactivated.

6. The method according to claim 5, in which the shift fork in operative engagement with the sliding sleeve (24) is preloaded with a defined and/or variable preload force during the disengaging operation, wherein the preload force is less than a shift force, which is only exerted on the shift fork when the drivetrain is load-free.

7. The method according to claim 5 or 6, in which the disengaging operation is performed after a shift request with a defined delay and in coordination with the behaviour of the drive motor of which the drive torque has previously been reduced.

8. The method according to one of the claims 1 to 7, in which, in preparation of or during an engaging operation, while the sliding sleeve (24) previously disengaged from the gearwheel of the deactivated first gear ratio is approaching an adjacent gearwheel (28) of a second gear ratio to be activated, a positive fit is found out for the sliding sleeve (24) by detecting a torque curve and/or speed curve of the electric-motor direct drive (12) of the shift drum (10) and identifying therefrom whether the sliding sleeve (24) has established the engagement with the gearwheel (28) of the second gear ratio to be activated.

9. The method according to claim 8, in which, after an unsuccessful engaging operation and/or after an unsuccessful attempt to establish an engagement between sliding sleeve (24) and gearwheel (28) of the second gear ratio to be activated, the engaging operation is repeated at least once or several times by repeated rotation of the shift drum (10) with correspondingly guided shift fork.

10. The method according to claim 8 or 9, in which an unsuccessful engaging operation and/or an unsuccessful attempt to establish an engagement between sliding sleeve (24) and gearwheel (28) of the second gear ratio to be activated is detected and/or identified at least based on the detection of the rotational speeds of the gearwheel (28) or gearwheels (28) of the second gear ratio and/or based on the detection of the angular velocity and/or of the rotation angle of the shift drum (10) and/or of the drive torque of the electric-motor direct drive (12) to be applied for the rotation of the shift drum (10).

11. The method according to one of the claims 8 to 10, in which at least the movement speed and the movement curve of the shift fork and/or of the shift drum (10) actuating the shift fork are detected and analysed in connection with an incomplete engaging operation and therewith associated jamming and/or catching of the sliding sleeve (24) with the gearwheel (28) of the second gear ratio.

12. The method according to claim 11, in which an actuating power and/or a rotational speed of the shift drum (10) is reduced and/or varied in an oscillating manner once or several times in connection with an incomplete engaging operation and therewith associated jamming and/or catching of the sliding sleeve (24) with the gearwheel (28) of the second gear ratio.

13. The method according to claim 11 or 12, in which a rotational speed of the shift drum (10) is reduced and/or inverted once or several times in connection with an incomplete engaging operation and therewith associated jamming and/or catching of the sliding sleeve (24) with the gearwheel (28) of the second gear ratio.

14. The method of one of the claims 8 to 13, in which at least the movement speed and the movement curve of the shift fork and/or of the shift drum (10) actuating the shift fork are detected and analysed in connection with a nearly complete or a complete engaging operation and therewith associated fit of the sliding sleeve (24) with the gearwheel (28) of the second gear ratio and after a return movement of the sliding sleeve (24) out of the fit with the gearwheel (28) of the second gear ratio into the gearwheel of the disengaged first gear ratio.

15. The method of one of the claims 8 to 13, in which at least the movement speed and the movement curve of the shift fork and/or of the shift drum (10) actuating the shift fork are detected and analysed in connection with an incomplete engaging operation and therewith associated jamming and/or catching of the sliding sleeve (24) with the gearwheel (28) of the second gear ratio and after a return movement of the sliding sleeve (24) out of the fit with the gearwheel (28) of the second gear ratio into the gearwheel of the disengaged first gear ratio.

16. The method according to one of the claims 8 to 15, in which at least the movement speed and the movement curve of the shift fork and/or of the shift drum (10) actuating the shift fork are detected and analysed in connection with an incomplete engaging operation and therewith associated jamming and/or catching of the sliding sleeve (24) with the gearwheel (28) of the second gear ratio and after a return movement of the sliding sleeve (24) out of the fit with the gearwheel (28) of the second gear ratio without establishing an engagement with the gearwheel of the disengaged first gear ratio.

17. The method according to one of the claims 8 to 15, in which at least the movement speed and the movement curve of the shift fork and/or of the shift drum (10) actuating the shift fork are detected and analysed in connection with a nearly complete or a complete engaging operation and therewith associated fit of the sliding sleeve (24) with the gearwheel (28) of the second gear ratio and after a return movement of the sliding sleeve (24) out of the fit with the gearwheel (28) of the second gear ratio without establishing an engagement with the gearwheel of the disengaged first gear ratio.

18. The method according to claim 16 or 17, in which, after identified return movement of the sliding sleeve (24) out of the fit with the gearwheel (28) of the second gear ratio, an amplified and/or extended and/or at least partially or in sections repeated shift pulse for the movement of the shift fork is initiated by the electric-motor direct drive (12) for the shift drum (10).

19. The method according to one of the claims 8 to 18, in which, by detection and evaluation of the rotational energies stored in the gear pairs and/or in the shift drum (10), a sliding speed below a defined minimum shift speed is identified for the sliding sleeve (24), and a rotational speed of the gear pair of the second gear ratio to be brought into engagement is increased.

20. The method according to one of the claims 1 to 19, in which a current consumption of the electric-motor direct drive (12) of the shift drum (10) is detected and evaluated in each case in connection with change operations of gear ratios.

21. The method according to claim 20, in which the exceeding or falling below of a defined threshold value is monitored during the detection of the current consumption of the electric-motor direct drive (12) of the shift drum (10), wherein, after an exceeding of the threshold value, a current integral is calculated, which is reset to a value of zero upon a subsequent falling below of the threshold value.

22. The method according to claim 21, in which the current integral is continuously calculated, wherein, after exceeding a limit value, at least the drive control of the shift drum (10) is interrupted and further shift operations are thereby suppressed.

23. The method according to claim 21 or 22, in which the drive control of the shift drum (10) is reactivated after a defined time interval has elapsed.

24. A torque-converting and/or speed-converting variable-speed transmission, which has an input shaft and an output shaft and at least two gear ratios, each of which is assigned at least one changeable gear pair,
- wherein shifting elements act on sliding sleeves (24) that are connected to the gear pairs or to the gearwheels of the gear pairs and are able to change these in connection with change operations of gear ratios,
- wherein the shifting elements are in engagement with a shift drum (10), which is bringable into defined angular positions and rotatable between these angular positions,
- wherein the shift drum (10) is coupled with an electric-motor direct drive (12), which is designed to rotate the shift drum (10) and to bring it into the particular defined angular positions in order to change gear ratios,
- and wherein the electric-motor direct drive (12) of the shift drum (10) is assigned at least one device and/or one sensor for the detection of the electric supply currents upon actuations of the shift drum (10) in connection with change operations of gear ratios,
**characterised in that**
- the variable-speed transmission is designed such that the control of the change operations of gear ratios is carried out at least based on the detected supply currents of the electric-motor direct drive (12) of the shift drum (10), further taking into account data on rotational energies of the gearwheels involved in the particular change operation and/or of gear pairs in meshing engagement therewith.

25. The variable-speed transmission according to claim 24, wherein the variable-speed transmission is furthermore designed such that its control of the change operations of gear ratios can take into account the output signals of at least one sensor assigned to the shift drum (10), wherein the at least one sensor is provided for the detection of rotational speeds and/or of accelerations of the shift drum (10) in change operations of gear ratios.

## Revendications

1. Procédé de commande d'un mécanisme de changement de vitesse à conversion de couple et/ou de vitesse, qui comprend un arbre d'entrée et un arbre de sortie ainsi qu'au moins deux étages de transmission, à chacune étant associée au moins une paire de roues dentées changeable,
- dans lequel des éléments de changement de vitesse agissent sur des manchons coulissants qui sont en communication avec les paires de roues dentées ou bien les roues dentées des paires de roues dentées et peuvent changer celles-ci,
- dans lequel les éléments de changement de vitesse sont en prise avec un tambour de changement de vitesse (10) qui peut être amené dans des positions angulaires définies et être tourné entre ces positions angulaires,
- dans lequel le tambour de changement de vitesse (10) est couplé à un entraînement direct électromoteur (12) qui fait tourner le tambour de changement de vitesse (10) pour changer des étages de transmission et qui amène celui-ci dans les positions angulaires définies respectives,
- et dans lequel, lors de l'activation ou de la désactivation d'un étage de transmission et lors du changement d'étages de transmission du mécanisme de changement de vitesse, les rotations du tambour de changement de vitesse (10) sont adaptées aux vitesses respectives des roues dentées (28) à mettre hors prise ou à mettre en prise avec les manchons coulissants (24),
- dans lequel respectivement au moins les énergies de rotation des roues dentées (28) concernées et/ou des paires de roues dentées en prise avec celles-ci sont prises en compte en même temps.

2. Procédé selon la revendication 1, dans lequel les énergies de rotation des pièces rotatives en prise avec les roues dentées (28) respectives qui sont impliquées dans un changement d'un étage de transmission respectif sont prises en compte.

3. Procédé selon la revendication 1 ou 2, dans lequel les énergies de rotation pour différents étages de transmission sont pondérées chacune différemment et/ou sont extraites de tableaux ou de champs caractéristiques et sont prises en compte respectivement différemment.

4. Procédé selon l'une quelconque des revendications 1 à 3, dans lequel les énergies de rotation du tambour de changement de vitesse (10) et/ou de l'entraînement direct électromoteur (12) entraînant le tambour de changement de vitesse (10) sont prises en compte à titre complémentaire ou séparément.

5. Procédé selon l'une quelconque des revendications 1 à 4, dans lequel l'entraînement direct électromoteur (12) du tambour de changement de vitesse (10) est couplé électroniquement à une commande d'entraînement d'un moteur d'entraînement, dans lequel un couple d'entraînement du moteur d'entraînement est réduit pendant et/ou en préparation d'une opération de débrayage d'un manchon coulissant (24) d'une roue dentée (28) d'un premier étage de transmission à désactiver.

6. Procédé selon la revendication 5, dans lequel, lors de l'opération de débrayage, la fourchette de changement de vitesse en prise active avec le manchon coulissant (24) est précontrainte avec une force de précontrainte définie et/ou variable, la force de précontrainte étant inférieure à une force de changement de vitesse qui n'est exercée sur la fourchette de changement de vitesse que lorsque le groupe motopropulseur est sans charge.

7. Procédé selon la revendication 5 ou 6, dans lequel l'opération de débrayage se fait après une demande de changement de vitesse avec un retard défini et en coordination avec le comportement du moteur d'entraînement dont le couple d'entraînement a été réduit auparavant.

8. Procédé selon l'une quelconque des revendications 1 à 7, dans lequel, en préparation ou pendant une opération d'embrayage pour le manchon coulissant (24) préalablement désengagé de la roue dentée du premier étage de transmission désactivé, lorsqu'il s'approche d'une roue dentée adjacente (28) d'un deuxième étage de transmission à activer, on cherche un ajustement à engagement positif en détectant une courbe de couple et/ou de vitesse de l'entraînement direct électromoteur (12) du tambour de changement de vitesse (10) et en détectant à partir de celle-ci si le manchon coulissant (24) s'est engrené avec la roue dentée (28) du deuxième étage de transmission à activer.

9. Procédé selon la revendication 8, dans lequel, après une opération d'embrayage infructueuse et/ou après une tentative infructueuse d'établissement d'un engrènement entre le manchon coulissant (24) et la roue dentée (28) du deuxième étage de transmission à activer, l'opération d'embrayage est répétée au moins une fois ou plusieurs fois par une nouvelle rotation du tambour de changement de vitesse (10) avec une fourchette de changement de vitesse guidée de manière correspondante.

10. Procédé selon la revendication 8 ou 9, dans lequel une opération d'embrayage infructueuse et/ou une tentative infructueuse d'établissement d'un engrènement entre le manchon coulissant (24) et la roue dentée (28) du deuxième étage de transmission à activer est détectée et/ou reconnue au moins sur la base de la détection des vitesses de rotation de la roue dentée (28) ou des roues dentées (28) du deuxième étage de transmission et/ou de la détection de la vitesse de rotation et/ou de l'angle de rotation de l'arbre sélecteur (10) et/ou du couple d'entraînement de l'entraînement direct électromoteur (12) à appliquer pour la rotation de l'arbre sélecteur (10).

11. Procédé selon l'une quelconque des revendications 8 à 10, dans lequel, en relation avec une opération d'embrayage incomplet et un coincement et/ou un accrochage y associé(s) du manchon coulissant (24) avec la roue dentée (28) du deuxième étage de transmission, au moins la vitesse de déplacement et la trajectoire de déplacement de la fourchette de changement de vitesse et/ou du tambour de changement de vitesse (10) commandant celle-ci sont détectés et analysés.

12. Procédé selon la revendication 11, dans lequel, en relation avec une opération d'embrayage incomplet et un coincement et/ou un accrochage y associé(s) du manchon coulissant (24) avec la roue dentée (28) du deuxième étage de transmission, une force de réglage et/ou une vitesse de rotation du tambour de changement de vitesse (10) est réduite une ou plusieurs fois et/ou variée de manière oscillante.

13. Procédé selon la revendication 11 ou 12, dans lequel, en relation avec une opération d'embrayage incomplet et un coincement et/ou un accrochage y associé(s) du manchon coulissant (24) avec la roue dentée (28) du deuxième étage de transmission, une vitesse de rotation du tambour de changement de vitesse (10) est réduite et/ou inversée une ou plusieurs fois

14. Procédé selon l'une quelconque des revendications 8 à 13, dans lequel, en relation avec une opération d'embrayage presque complet ou complet et l'ajustement y associé du manchon coulissant (24) avec la roue dentée (28) du deuxième étage de transmission et après un mouvement de retour du manchon coulissant (24) de l'ajustement avec la roue dentée (28) du deuxième étage de transmission dans la roue dentée du premier étage de transmission désembrayé, au moins la vitesse de déplacement et la trajectoire de déplacement de la fourchette de changement de vitesse et/ou du tambour de changement de vitesse (10) commandant celle-ci sont détectées et analysées.

15. Procédé selon l'une quelconque des revendications 8 à 13, dans lequel, en relation avec une opération d'embrayage incomplet et un coincement et/ou un accrochage y associé(s) du manchon coulissant (24) avec la roue dentée (28) du deuxième étage de transmission et après un mouvement de retour du manchon coulissant (24) de l'ajustement avec la roue dentée (28) du deuxième étage de transmission dans la roue dentée du premier étage de transmission désembrayé, au moins la vitesse de déplacement et la trajectoire de déplacement de la fourchette de changement de vitesse et/ou du tambour de changement de vitesse (10) commandant celle-ci sont détectées et analysées.

16. Procédé selon l'une quelconque des revendications 8 à 15, dans lequel, en relation avec une opération d'embrayage incomplet et un coincement et/ou un accrochage y associé(s) du manchon coulissant (24) avec la roue dentée (28) du deuxième étage de transmission et après un mouvement de retour du manchon coulissant (24) de l'ajustement avec la roue dentée (28) du deuxième étage de transmission sans l'établissement d'un engrènement avec la roue dentée du premier étage de transmission désembrayé, au moins la vitesse de déplacement et la trajectoire de déplacement de la fourchette de changement de vitesse et/ou du tambour de changement de vitesse (10) commandant celle-ci sont détectées et analysées.

17. Procédé selon l'une quelconque des revendications 8 à 15, dans lequel, en relation avec une opération d'embrayage presque complet ou complet et l'ajustement y associé du manchon coulissant (24) avec la roue dentée (28) du deuxième étage de transmission et après un mouvement de retour du manchon coulissant (24) de l'ajustement avec la roue dentée (28) du deuxième étage de transmission sans l'établissement d'un engrènement avec la roue dentée du premier étage de transmission désembrayé, au moins la vitesse de déplacement et la trajectoire de déplacement de la fourchette de changement de vitesse et/ou du tambour de changement de vitesse (10) commandant celle-ci sont détectées et analysées.

18. Procédé selon la revendication 16 ou 17, dans lequel, après avoir détecté un mouvement de retour du manchon coulissant (24) de l'ajustement avec la roue dentée (28) du deuxième étage de transmission, une impulsion de changement de vitesse amplifiée et/ou prolongée et/ou répétée au moins partiellement ou par sections pour le mouvement de la fourchette de changement de vitesse est initiée par l'entraînement direct électromoteur (12) pour le tambour de changement de vitesse (10).

19. Procédé selon l'une quelconque des revendications 8 à 18, dans lequel, par détection et évaluation des énergies de rotation stockées dans les paires de roues dentées et/ou dans le tambour de changement de vitesse (10), une vitesse de déplacement du manchon coulissant (24) inférieure à une vitesse de changement de vitesse minimale définie est détectée et une vitesse de rotation de la paire de roues dentées du deuxième étage de transmission à engager est augmentée.

20. Procédé selon l'une quelconque des revendications 1 à 19, dans lequel, en relation avec des opérations de changement d'étages de transmission, une consommation de courant de l'entraînement direct électromoteur (12) du tambour de changement de vitesse (10) est respectivement détectée et évaluée.

21. Procédé selon la revendication 20, dans lequel, lors de la détection de la consommation de courant de l'entraînement direct électromoteur (12) du tambour de changement de vitesse (10), on surveille si une valeur de seuil définie est dépassée ou n'est pas atteinte, dans lequel, après que la valeur de seuil a été dépassée, une intégrale de courant est calculée, laquelle est remise à une valeur de zéro lorsque, ensuite, la valeur de seuil n'est pas atteinte.

22. Procédé selon la revendication 21, dans lequel l'intégrale de courant est calculée en continu, dans lequel, après qu'une valeur limite a été dépassée, au moins la commande d'entraînement du tambour de changement de vitesse (10) est interrompue et ainsi d'autres opérations de changement de vitesse sont supprimées.

23. Procédé selon la revendication 21 ou 22, dans lequel, après qu'un intervalle de temps défini s'est écoulé, la commande d'entraînement du tambour de changement de vitesse (10) est activée à nouveau.

24. Mécanisme de changement de vitesse à conversion de couple et/ou de vitesse, qui comprend un arbre d'entrée et un arbre de sortie ainsi qu'au moins deux étages de transmission, à chacune étant associée au moins une paire de roues dentées changeable,
- dans lequel des éléments de changement de vitesse agissent sur des manchons coulissants (24) qui sont en communication avec les paires de roues dentées ou bien les roues dentées des paires de roues dentées et peuvent changer celles-ci en relation avec des opérations de changement de vitesse d'étages de transmission,
- dans lequel les éléments de changement de vitesse sont en prise avec un tambour de changement de vitesse (10) qui peut être amené dans des positions angulaires définies et être tourné entre ces positions angulaires,
- dans lequel le tambour de changement de vitesse (10) est couplé à un entraînement direct électromoteur (12) qui est conçu pour faire tourner le tambour de changement de vitesse (10) pour changer des étages de transmission et pour amener celui-ci dans les positions angulaires définies respectives,
- et dans lequel au moins un dispositif et/ou un capteur destiné à détecter les courants d'alimentation électrique lorsque le tambour de changement de vitesse (10) est actionné, en relation avec des opérations de changement d'étages de transmission est associé à l'entraînement direct électromoteur (12) du tambour de changement de vitesse (10),
**caractérisé par le fait que**
- le mécanisme de changement de vitesse est conçu de telle sorte que la commande des opérations de changement d'étages de transmission s'effectue au moins sur la base des courants d'alimentation détectés de l'entraînement direct électromoteur (12) du tambour de changement de vitesse (10), en tenant compte en outre des données relatives à des énergies de rotation des roues dentées impliquées dans l'opération de changement respectif et/ou des paires de roues dentées qui sont en prise avec elles.

25. Mécanisme de changement de vitesse selon la revendication 24, dans lequel le mécanisme de changement de vitesse est en outre conçu de telle sorte que sa commande des opérations de changement d'étages de transmission puisse prendre en compte les signaux de sortie d'au moins un capteur qui est associé au tambour de changement de vitesse (10), dans lequel ledit au moins un capteur est prévu pour détecter des vitesses de rotation et/ou des accélérations du tambour de changement de vitesse (10) pendant des opérations de changement d'étages de transmission.
